(19) Europäisches Patentamt
European Patent Office
Office européen des brevets

(11) EP 2 489 010 B1

(12) EUROPÄISCHE PATENTSCHRIFT

(45) Veröffentlichungstag und Bekanntmachung des Hinweises auf die Patenterteilung:
**11.12.2013 Patentblatt 2013/50**

(21) Anmeldenummer: **10775732.0**

(22) Anmeldetag: **13.10.2010**

(51) Int Cl.:
***G06T 11/00*** *(2006.01)*

(86) Internationale Anmeldenummer:
**PCT/EP2010/065365**

(87) Internationale Veröffentlichungsnummer:
**WO 2011/045351 (21.04.2011 Gazette 2011/16)**

# (54) VERFAHREN ZUR ZERSTÖRUNGSFREIEN 3D-UNTERSUCHUNG EINES PRÜFKÖRPERS MITTELS COMPUTERTOMOGRAPHIE

METHOD FOR THE NONDESTRUCTIVE 3D ANALYSIS OF A TEST SPECIMEN BY MEANS OF COMPUTER TOMOGRAPHY

PROCÉDÉ D'ANALYSE 3D NON DESTRUCTIVE D'UN OBJET À TESTER AU MOYEN D'UNE TOMODENSITOMÉTRIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.10.2009 DE 102009049388**

(43) Veröffentlichungstag der Anmeldung:
**22.08.2012 Patentblatt 2012/34**

(73) Patentinhaber:
- **Fraunhofer-Gesellschaft zur Förderung der angewandten Forschung e.V.**
  **80686 München (DE)**
- **Friedrich-Alexander-Universität Erlangen-Nürnberg**
  **91054 Erlangen (DE)**

(72) Erfinder:
- **VOLAND, Virginia**
  **90763 Fürth (DE)**
- **NACHTRAB, Frank**
  **91058 Erlangen (DE)**
- **UHLMANN, Norman**
  **91056 Erlangen (DE)**
- **FUCHS, Theobald**
  **90429 Nürnberg (DE)**

(74) Vertreter: **Schenk, Markus et al**
**Patentanwälte Schoppe, Zimmermann, Stöckeler, Zinkler & Partner**
**Postfach 246**
**82043 Pullach bei München (DE)**

(56) Entgegenhaltungen:
- **BAY B K ET AL: "Digital volume correlation: three-dimensional strain mapping using X-ray tomography", EXPERIMENTAL MECHANICS SAGE SCIENCE PRESS USA, Bd. 39, Nr. 3, September 1999 (1999-09), Seiten 217-226, XP002616418, ISSN: 0014-4851**
- **BING PAN ET AL: "TOPICAL REVIEW; Two-dimensional digital image correlation for in-plane displacement and strain measurement: a review", MEASUREMENT SCIENCE AND TECHNOLOGY, IOP, BRISTOL, GB, Bd. 20, Nr. 6, 1. Juni 2009 (2009-06-01), Seite 62001, XP020160427, ISSN: 0957-0233**
- **LOUIS ET AL: "Imaging strain localization by X-ray radiography and digital image correlation: Deformation bands in Rothbach sandstone", JOURNAL OF STRUCTURAL GEOLOGY, PERGAMON PRESS, XX, Bd. 29, Nr. 1, 28. November 2006 (2006-11-28), Seiten 129-140, XP005781455, ISSN: 0191-8141, DOI: DOI: 10.1016/J.JSG.2006.07.015**
- **FORSBERG F ET AL: "3D deformation and strain analysis in compacted sugar using x-ray microtomography and digital volume correlation; 3D deformation and strain analysis in compacted sugar", MEASUREMENT SCIENCE AND TECHNOLOGY, IOP, BRISTOL, GB, Bd. 20, Nr. 9, 1. September 2009 (2009-09-01), Seite 95703, XP020164683, ISSN: 0957-0233, DOI: DOI: 10.1088/0957-0233/20/9/095703**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung bezieht sich auf ein Konzept zur Datenermittlung für eine zerstörungsfreie 3D-Untersuchung eines Prüfkörpers mittels Computertomographie und auf ein Konzept zum Auswerten einer Sequenz von 3D-Bildern mittels einer 3D-Bildkorrelation. Insbesondere beziehen sich Ausführungsbeispiele der vorliegenden Erfindung auf Abtast- und Analyseverfahren für eine in-situ-Computertomographie von Werkstoffen unter zyklischer oder kontinuierlicher Belastung zur optimierten Detektion und Charakteristisierung von Schädigungsprozessen mittels dreidimensionaler digitaler Bildkorrelation.

Die Computertomographie (CT) wird in der Medizin und der zerstörungsfreien Materialprüfung weit verbreitet eingesetzt. Bei der Computertomographie wird die Wechselwirkung zwischen Röntgenstrahlung und der Materie eines zu untersuchenden Objekts erfasst.

Im Folgenden werden einige Verfahren zur Untersuchung von Rissentstehung und Rissausbreitung, die jeweils verschiedene Ansätze verfolgen, dargestellt.

So nutzen beispielsweise optische Prüfverfahren eine zweidimensionale Bildkorrelation ("2D digital image correlation", 2D-DIC) zur Bestimmung von Spannungsfeldern auf der Oberfläche des Prüfobjekts. Dazu werden regelmäßige Muster auf die Oberfläche des Objekts aufgebracht und das Objekt mit einer optischen Kamera während des Belastungsvorgangs aufgenommen. Mittels der 2D-DIC wird die Position der Referenzpunkte im zeitlichen Verlauf beobachtet. Anhand dieser Daten können Spannungsfelder berechnet und die räumliche Ausbreitung des Risses simuliert werden (J. Abanto-Bueno, J. Lambros, Investigation of crack growth in functionally graded materials using digital image correlation, Engineering Fracture Mechanics, Volume 69, 2002, Pages 1695-1711 und Tim Hutt, Peter Cawley, Feasibility of digital image correlation for detection of cracks at fastener holes, NDT&E International, Volume 42, March 2009, Pages 141-149).

Ferner werden beispielsweise Experimente mittels Röntgentechnik an Synchrotronstrahlungsquellen durchgeführt, z.B. am Europäischen Synchrotron ESRF in Grenoble (E. Ferrie, J.-Y. Buffiere et al., Fatigue crack propagation: In situ visualization using X-ray microtomography and 3D simulation using the extended finite element method, Acta Materialia, Volume 54, Issue 4, February 2006, Pages 1111-1122; Julien Réthoré, Jean-Philippe Tinnes, Stéphande Roux, et al., Extended three-dimensional digital image correlation (X3D-DIC), C.R. Mécanique 336, June 2008, Pages 643-649).

Ferner werden beispielsweise Bruchstellen in biegsamen Materialien mittels Radioskopie untersucht. Um Spannungsfelder mit einer Auflösung im Mikrometerbereich zu berechnen, wurden Röntgenprojektionen der Prüfkörper unter Belastung aufgenommen. Die innere Struktur der Materialien wurde hierbei als Referenz benutzt, um mittels einer 2D-DIC die Spannungsfelder zu berechnen (Daniel Vavrik, Jan Jakubek, Tomas Holy, Micrometric scale measurement of material structure moving utilizing $\mu$-radiographic technique, Nuclear Instruments and Methods in Physic Research Section A: Accelerators, Spectrometers, Detectors and Associated Equipment, Volume 591, Issue 1, June 2008, Pages 24-27).

In der Patentveröffentlichung US 2006/0137466 A1 wird eine Vorrichtung und ein Verfahren zur Beobachtung von Rissausbreitungen mittels Änderungen in elektrischen Spannungen beschrieben. Hierbei wird an beiden Seiten des Prüfkörpers eine elektrische Spannung angelegt und diese im Verlauf des Versuchs gemessen. Änderungen in der Spannung lassen dabei Rückschlüsse auf die Größe des Risses zu. Eine genaue Lokalisierung des Risses oder Aussagen über die räumliche Ausbreitung des Risses sind dabei nicht möglich.

Aufgrund der im Vorhergehenden beschriebenen, bekannten Vorgehensweisen zur Prüfkörperuntersuchung stellt sich jedoch dahin gehend ein generelles Problem, dass man bei der Untersuchung von Mechanismen durch zyklische oder kontinuierliche Belastung in allen Materialklassen (Kunststoffe, Metalle, Keramiken, etc.) an die Grenzen der gängigen Prüfverfahren stößt. Derzeit existieren keine Verfahren, mit denen es z.B. möglich ist, Ermüdungsschäden von Werkstoffen während der zyklischen Belastung zu einem ausreichend frühen Zeitpunkt zu detektieren und mit ausreichend hoher örtlicher Auflösung darzustellen, um den Schadensentstehungsprozess nachvollziehen zu können.

Weiterhin sind in vielen alltagsrelevanten Bereichen, wie im Fahrzeugbau, Anlagenbau oder Transportwesen, Bauteile einer starken zyklischen oder kontinuierlichen Belastung ausgesetzt, und es ist unabdingbar, ein hohes Maß an Sicherheit zu gewährleisten. Aufgrund des Kosteneinsparungspotenzials ist der Druck zum Leichtbau bei modernen Bauteilen sehr hoch, was sich negativ auf deren Beanspruchbarkeit auswirkt. Aus Zeit- und Kostengründen möchte man außerdem die Wartungsintervalle so lang wie möglich wählen und schnelle Prüfverfahren einsetzen. Diese Prüfverfahren können aufgrund des Geschwindigkeitsanspruchs oft nur eine begrenzte Präzision bieten. Um so wichtiger ist die frühzeitige Erkennung von Ermüdungserscheinungen, damit die entsprechenden Teile ausgetauscht werden können, bevor makroskopische Schäden auftreten bzw. Bauteilversagen eintritt.

Die wissenschaftliche Veröffentlichung von BAY B K ET AL: "Digital volume correlation: three-dimensional strain mapping using X-ray tomography", EXPERIMENTAL MECHANICS SAGE SCIENCE PRESS USA, Bd. 39, Nr. 3, September 1999 (1999-09), Seiten 217-226, XP002616418, ISSN: 0014-4851 bezieht sich auf eine digitale Volumenkorrelation zur dreidimensionalen Stressabbildung unter Verwendung von Röntgentomographie.

Die wissenschaftliche Veröffentlichung von BING PAN et al.: "TOPICAL REVIEW; Two-dimensional digital image correlation for in-plane displacement and strain measurement: a review", MEASUREMENT SCIENCE AND TECHNOLOGY, IOP, BRISTOL, GB, Bd. 20, Nr. 6, 1. Juni 2009 (2009-06-01), Seite 62001, XP020160427, ISSN: 0957-0233 bezieht sich auf eine zweidimensionale digitale Bildkorrelation für eine Messung eines In-Plane-Versatzes und mechanischen Stresses.

Die Aufgabe der vorliegenden Erfindung besteht daher darin, ein verbessertes Konzept für eine zerstörungsfreie 3D-Untersuchung eines Prüfkörpers mittels Computertomographie zu schaffen, womit Materialermüdungen auch im Innern des Prüfkörpers bzw. Bauteils ermittelt werden können und das ferner möglichst zuverlässige und präzise Aussagen über den Zustand des Bauteils und die verbleibende Lebensdauer ermöglicht.

Diese Aufgabe wird durch ein Verfahren zur Datenermittlung für eine zerstörungsfreie 3D-Untersuchung eines Prüfkörpers mittels Computertomographie nach einem der Ansprüche 1 oder 17, ein Verfahren zum Auswerten einer Sequenz von 3D-Bildern mittels einer 3D-Bildkorrelation nach Anspruch 11, eine Vorrichtung zur Datenermittlung nach Anspruch 14 und ein Computerprogrammprodukt nach Anspruch 15 gelöst.

Die Erkenntnis der vorliegenden Erfindung besteht darin, dass bei einer Datenermittlung für eine zerstörungsfreie 3D-Untersuchung eines Prüfkörpers bzw. Testobjekts zunächst ein vollständiger Datensatz von Röntgendurchstrahlungsbildern mit einer hohen Winkelauflösung aufgenommen wird und daraus ein 3D-Bild rekonstruiert wird. Unter Belastung des Prüfkörpers wird nun eine Ermüdung des Materials des Prüfkörpers provoziert, während nun beispielsweise permanent weitere einzelne Durchstrahlungsbilder des Prüfkörpers in größeren Winkelschritten aufgenommen und mit dem zuvor erstellten Referenzdatensatz verglichen werden.

Diese Bildaufnahmen finden beispielsweise zeitlich abgestimmt mit den Belastungszyklen, d.h. getriggert (synchronisiert), statt. Nun wird jede der mit größeren Winkelschritten aufgenommene Projektion mit der Projektion in dem Referenzdatensatz aus demselben Winkel bzw. einem zugeordneten Winkel des jeweils vorherigen (möglicherweise bereits aktualisierten) Datensatzes bzw. dem Referenzdatensatz verglichen, um Veränderungen zu erfassen, wobei dies mittels einer zweidimensionalen Bildkorrelation erfolgt. Anhand eines geeigneten Schwellwerts für die Korrelation wird nun ermittelt, ob eine "relevante" Änderung im Objekt an dieser Winkelposition aufgetreten ist. Kann eine solche Änderung in dem Datensatz der Durchstrahlungsbilder mit größeren Winkelschritten gegenüber dem Referenzdatensatz bzw. dem vorherigen Datensatz festgestellt werden, so wird in dem Bereich um diese Winkelposition das Testobjekt wiederum in kleineren Winkelschritten aufgenommen. Die entsprechenden Projektionen werden im Referenzdatensatz ausgetauscht und rekonstruiert, so dass eine "inkrementelle Rekonstruktion" erhalten wird. Auf diese Weise ergibt sich eine zeitlich aufgelöste Sequenz von Volumina, die Informationen über den jeweils aktuellen Zustand der Materialveränderung, z.B. eines Risses, beinhaltet. Durch die Beschränkung der zu speichernden Durchstrahlungsbilder auf solche Projektionen, die eine Veränderung gegenüber dem vorherigen Zustand des Objektes aufweisen, wird die zu bewältigende Datenmenge auf ein Minimum reduziert.

Mittels einer dreidimensionalen digitalen Bildkorrelation (3D-DIC) werden nun die inkrementell erhaltenen rekonstruierten Volumina zeitlich abfolgend ausgewertet, wobei dadurch die Ausbreitung beispielsweise eines Risses oder einer aufgrund einer Beanspruchung hervorgerufenen Materialveränderung in der räumlichen und der zeitlichen Komponente beobachtet werden kann. Da sich durch die Verfolgung beispielsweise einer Rissausbreitung im 3D-Fall der Informationsgehalt der Messungen stark erhöht, können durch diesen deutlich höheren Informationsgehalt weitergehende Aussagen über den räumlichen und zeitlichen Verlauf der Schädigungen des Materials des Prüfkörpers präzisiert und Vorhersagen über die Lebensdauer von Bauteilen, die dem Testobjekt/Prüfkörper entsprechen, getroffen werden. Gegenüber der zweidimensionalen Bildkorrelation bedeutet die Zunahme einer weiteren Dimension aber eine Vervielfachung des Rechenaufwands, wobei aber erfindungsgemäß erkannt wurde, dass die Bildkorrelation in ihrem Prinzip einer Faltung im mathematischen Sinne ähnelt. Durch eine mathematische Überführung der Volumina in den Frequenzraum kann ein Geschwindigkeitsvorteil gegenüber der Berechnung im Ortsraum erzielt werden. Dieser Vorteil wird allerdings erst ab einer bestimmten Größe des relevanten Teilvolumens erzielt, da die Überführung in den Frequenzraum mittels einer Fourier-Transformation ebenfalls einen Rechenaufwand mit sich bringt.

Dieses erfindungsgemäße Konzept ermöglicht somit eine effiziente Datenermittlung und Rekonstruktion für die Röntgen-Computertomographie, um Zustandsänderungen in einem Prüfkörper mit hoher zeitlicher Auflösung dreidimensional darzustellen. Dadurch können beispielsweise Schädigungsereignisse im Inneren des Prüfkörpers bereits frühzeitig und mit hoher räumlicher Auflösung erkannt werden.

Ausführungsbeispiele der Erfindung werden nachfolgend Bezug nehmend auf die beiliegenden Figuren näher erläutert. Es zeigen:

Fig. 1 eine Prinzipdarstellung einer erfindungsgemäßen CT-Anlage gemäß einem Ausführungsbeispiel der Erfindung;

Fig. 2a ein Flussdiagramm eines Verfahrens zur Datenermittlung für eine zerstörungsfreie 3D-Untersuchung eines Prüfkörpers mittels Computertomographie gemäß einem Ausführungsbeispiel der Erfindung;

Fig. 2b eine Prinzipdarstellung zur Veranschaulichung der Definition einer 2D-Bildkorrelation;

Fig. 2c ein Flussdiagramm eines beispielhaften Verfahrens zur Datenermittlung für eine zerstörungsfreie 3D-Untersuchung eines Prüfkörpers mittels Computer-tomographie gemäß einem weiteren Ausführungsbeispiel der Erfindung;

Fig. 3a ein Flussdiagramm eines Verfahrens zum Auswerten einer Abfolge bzw. Sequenz von 3D-Bildern mittels einer 3D-Bildkorrelation gemäß einem Ausführungsbeispiel der Erfmdung;

Fig. 3b ein Flussdiagramm eines Verfahrens zum Rekonstruieren einer Sequenz von 3D-Bildern gemäß einem Ausführungsbeispiel der Erfindung;

Fig. 3c ein Flussdiagramm eines Verfahrens zur 3D-Bildkorrelation aus Fig. 3a mittels einer Fourier-Transformation im Frequenzraum gemäß einem weiteren Ausführungsbeispiel der Erfindung, und

Fig. 4 ein Flussdiagramm eines Verfahrens zur zerstörungsfreien 3D-Untersuchung eines Prüfkörpers mittels Computertomographie gemäß einem Ausführungsbeispiel der Erfindung.

Bevor im Zusammenhang mit den Figuren 1 bis 4 Ausführungsbeispiele der vorliegenden Erfindung beschrieben und hinsichtlich ihrer Funktionsweise erläutert werden, bietet es sich an, an dieser Stelle darauf hinzuweisen, dass im Folgenden für Elemente, Objekte und Strukturen mit gleicher Struktur oder gleichen funktionellen Eigenschaften gleiche Bezugszeichen verwendet werden. Entsprechend sind Elemente, Strukturen und Objekte, die mit gleichen Bezugszeichen bezeichnet sind, in unterschiedlichen Ausführungsbeispielen der vorliegenden Erfindung hinsichtlich ihrer genauen Implementierungsdetails untereinander austauschbar. Dies bezieht sich sowohl auf Materialwahlen, Dimensionierungen oder auch andere Parameter.

Wie in der Einleitung erwähnt, wird in der CT die Wechselwirkung zwischen Röntgenstrahlung und der Materie eines zu untersuchenden Objekts erfasst. Im folgenden wird das Prinzip der CT kurz erläutert.

Trifft Röntgenstrahlung auf Materie, so wird je nach Material- und Objektbeschaffenheit ein unterschiedlich großer Anteil der Strahlung von dem Objekt absorbiert. Ein Durchstrahlungsbild entsteht aus der Detektion und Visualisierung nicht absorbierter Röntgenstrahlung. Aufgrund der Überlagerung von Bereichen unterschiedlicher Dichte enthält eine solche Projektion allerdings keine Tiefeninformation. Erst durch die Projektion der Fläche unter einem weiteren Winkel lässt sich eine räumliche Information des Prüfkörpers berechnen. Je mehr Projektionen unter verschiedenen Winkeln aufgenommen werden, umso größer ist die Tiefeninformation, die man aus den Aufnahmen rekonstruieren kann.

Anhand der Informationen aus einer Vielzahl von Projektionen - beispielsweise 800 oder 1.600 Projektionen - wird mittels einer Radon-Transformation einem Volumenelement (Voxel) ein Schwächungswert zugeordnet. Die Auflösung des rekonstruierten Volumens hängt dabei signifikant von der Anzahl der zugrunde liegenden Projektionen sowie von der Größe der Detektorelemente ab.

Fig. 1 zeigt eine Darstellung einer CT-Anlage 105 gemäß einem Ausführungsbeispiel der Erfindung für eine zerstörungsfreie 3D-Untersuchung eines Prüfkörpers 120. Die CT-Anlage 105 aus Fig. 1 weist eine Röntgenröhre 110, einen Prüfkörper 120 und einen für Röntgenstrahlung empfindlichen Detektor 130 auf. Die von der Röntgenstrahlungsquelle 110 austretende Röntgenstrahlung 112 durchstrahlt den Prüfkörper 120 und trifft auf den röntgenempfindlichen Detektor 130.

In Transmission entsteht nach Durchgang der Röntgenstrahlung 112 durch den Prüfkörper 120 eine Röntgendurchstrahlungsaufnahme 160. Die Röntgendurchstrahlungsaufnahme 160 beinhaltet die Bildinformationen über die Linienintegrale über die Schwächungskoeffizienten entlang der Röntgenstrahlen beim Durchgang der Röntgenstrahlen 112 durch den Prüfkörper 120.

Ferner ist der CT-Anlage 105 eine Verarbeitungseinrichtung 170 und eine mit der Verarbeitungseinrichtung 170 gekoppelte Bereitstellungseinrichtung 180 zugeordnet, die zur Auswertung der erfassten Durchstrahlungsbilder 160 und der Steuerung des Testaufbaus einschließlich der Röntgenstrahlungsquelle 110, des Prüfkörpers 120 und des röntgenempfindlichen Detektors 130 dient.

In Fig. 1 weist die Röntgendurchstrahlungsaufnahme 160 eine Projektion des dreidimensionalen Volumens des Prüfkörpers 120 auf, wobei die Projektion dadurch entsteht, dass die von der Röntgenstrahlungsquelle 110 austretenden Röntgenstrahlen 112 nach Durchstrahlen des Prüfkörpers 120 auf die zweidimensionale Oberfläche des röntgenempfindlichen Detektors 130 abgebildet werden.

Der röntgenempfindliche Detektor 130 weist typischerweise einen Festkörperdetektor auf und kann als Zeilendetektor (z.B. in einer Fächerstrahl-CT) oder als Mehrzeilen- bzw. Flächendetektor (z.B. in einer 3D-Konusstrahl-CT) ausgebildet sein.

Bei der in Fig. 1 gezeigten beispielhaften Anordnung weist die CT-Anlage 105 eine 3D-Konusstrahl-CT auf,

wobei die Röntgenstrahlungsquelle 110 als näherungsweise punktförmig angesehen werden kann, und wobei der röntgenempfindliche Detektor 130 als Mehrzeilendetektor mit einer 2D-Oberfläche von beispielsweise 512x512 Kanälen (Pixeln) ausgebildet ist. Insbesondere ist festzuhalten, dass die CT-Anlage 105 sowohl als 3D-Konusstrahl-CT in Verbindung mit dem Mehrzeilendetektor wie in Fig. 1 gezeigt als auch als 2D-Fächerstrahl-CT in Verbindung mit einem Zeilendetektor ausgebildet sein kann.

Bei der Datenermittlung für die zerstörungsfreie 3D-Untersuchung des Prüfkörpers 120 mittels Computertomographie wird der Prüfkörper 120 mit einer durchschnittlichen Winkelschrittweite $\Delta$ um eine Rotationsachse 140 gedreht, wobei während der Rotation des Prüfkörpers 120 ein Winkelbereich 152 (beispielsweise ein vollständiger Winkelbereich von 360°) in einer Rotationsebene senkrecht zur Rotationsachse 140 überschritten wird, um eine Folge 162 von Röntgendurchstrahlungsaufnahmen 160 mit zugeordneten Winkelpositionen $\alpha_i$ zwischen den einzelnen Röntgendurchstrahlungsaufnahmen bzw. Projektionen 160 zu erhalten.

Die durchschnittliche Winkelschrittweite $\Delta$ ist dabei definiert als die mittlere Winkelschrittweite aller Winkelschrittweiten zwischen den einzelnen Winkelpositionen $\alpha_i$ in dem überschrittenen Winkelbereich 152. In anderen Worten, eine relativ große durchschnittliche Winkelschrittweite $\Delta$ bedeutet, dass die Folge 162 der Röntgendurchstrahlungsaufnahmen 160 mit einer relativ niedrigen Winkelauflösung erzeugt wird, und eine relativ kleine durchschnittliche Winkelschrittweite $\Delta$ bedeutet, dass die Folge 162 der Röntgendurchstrahlungsaufnahmen 160 mit einer relativ hohen Winkelauflösung erzeugt wird.

Fig. 1 zeigt ein quaderförmiges Werkstück (zu Darstellungszwecken), wobei jegliche Form des Werkstücks denkbar ist. Um eine vollständige Folge 162 der Röntgendurchstrahlungsaufnahmen 160 des Prüfkörpers 120 zu erhalten, wird der Prüfkörper während der Datenermittlung typischerweise in einem Winkelbereich zwischen -90° und +90°, der einem Winkelbereich zwischen 0° und 180° entspricht, oder zwischen 0° und 360° gedreht. Ferner kann der Prüfkörper 120 auch über einen Winkelbereich von mehreren Durchläufen gedreht werden, wobei der Winkelbereich ± 90°*n oder 0°-360°*n beträgt, und wobei n die Anzahl der Durchläufe darstellt.

In Fig. 1 steht die Rotationsachse 140 senkrecht auf der Normalen zur Oberfläche des röntgenempfindlichen Detektors 130, wobei der Prüfkörper 120 mit der durchschnittlichen Winkelschrittweite $\Delta$ in einer x,y-Ebene gedreht wird.

Alternativ kann die Datenermittlung auch dadurch durchgeführt werden, dass in der CT-Anlage 105 der Prüfkörper 120 ruht, und stattdessen die Röntgendurchstrahlungsquelle 110 und der röntgenempfindliche Detektor 130 während des Erzeugens der Folge 162 der Röntgendurchstrahlungsaufnahmen 160 des Prüfkörpers 120 in der x,y-Rotationsebene um die Rotationsachse 140 in dem Winkelbereich 152 gedreht werden, was lediglich einer Relativbewegung zu der in Fig. 1 dargestellten Ausführungsart entspricht.

Weiterhin alternativ kann die Aufnahme der Projektionen 160 auch dadurch erfolgen, dass der Prüfkörper 120 um jegliche andere Rotationsachse ausgenommen der Rotationsachse parallel zur x-Achse, beispielsweise um eine Rotationsachse parallel zur y-Achse in der x,z-Ebene gedreht wird, um einen vollständigen Satz von Projektionen 160 zu erhalten.

Jede Projektion 160 weist die Bildinformationen in Form einer 2D-Matrix von Durchstrahlungswerten, die typischerweise als Intensitätswerte vorliegen, auf. Mittels einer rechnerbasierten Auswertung, die beispielsweise auf Basis der Radon-Transformation durchgeführt werden kann, wird aus einer Vielzahl der Projektionen 160 der Folge 162 ein 3D-Bild bzw. 3D-Volumen rekonstruiert, wobei jedem Volumenelement bzw. Voxel des 3D-Bildes ein Schwächungskoeffizient bzw. Absorptionsgrad zugeordnet wird.

In der Computertomographie stellen die auf dem röntgenempfindlichen Detektor 130 auftreffenden Röntgenstrahlen 112 nach Durchgang durch den Prüfkörper 120 jeweils die Radon-Transformierten $R\{\mu(\mathbf{r})\}$ des räumlich verteilten Schwächungskoeffizienten $\mu = \mu(\mathbf{r})$ dar.

Mittels einer Radon-Rücktransformation bzw. inversen Radon-Transformationen $R^{-1}$ kann nun aus der Folge 162 von Projektionen 160 das 3D-Bild des Prüfkörpers 120 in Form einer räumlichen Verteilung von Schwächungskoeffizienten $\mu = \mu(\mathbf{r})$ berechnet werden. In der in Fig. 1 gezeigten CT-Anlage 105 kann der Prüfkörper 120 beispielsweise einen Werkstoff oder ein Bauteil aufweisen, wobei bei Ausführungsbeispielen der Erfindung der Prüfkörper 120 einem Belastungstest unterzogen werden kann, bei dem der Zustand des Prüfkörpers 120 beispielsweise eine kontinuierliche oder eine zyklische Belastung aufweist. Bei solch einem Belastungstest kann der Prüfkörper 120 beispielsweise Metalle wie z.B. Aluminium, Eisen oder Titan oder verschiedene Metalllegierungen aufweisen und in einer speziellen Maschine drehbar fixiert werden, so dass der Prüfkörper 120 mit einer Winkelschrittweite $\Delta$ beispielsweise zwischen 0,01° und 90° je nach messbarer Veränderung des Belastungszustands des Prüfkörpers 120 in der x,y-Ebene gedreht werden kann. Dabei ist die Winkelschrittweite $\Delta$ an den jeweiligen Testzustand (z.B. Belastungszustand) des Objekts bzw. Prüfkörpers 120 und an die jeweiligen Testbedingungen wie beispielsweise Veränderungen oder Schwankungen in der Umgebungstemperatur oder Arbeitstemperatur, ansteigende oder absteigende Druckbelastung oder Zugbelastung, langsamer oder schneller wachsende Datenmenge von akkumulierten Bildinformationen etc., während der Erfassung anpassbar.

Die in Fig. 1 dargestellte Verarbeitungseinrichtung 170 ist ausgebildet, um die im Nachfolgenden beschriebenen Konzepte zur Datenermittlung bzw. Datenauswertung zu überwachen bzw. zu steuern oder durchzuführen.

**Datenermittlung für eine zerstörungsfreie 3D-Untersuchung (Messablauf)**

Fig. 2a zeigt ein Flussdiagramm eines Verfahrens 200 zur Datenermittlung für eine zerstörungsfreie 3D-Untersuchung des Prüfkörpers 120 mittels Computertomographie bzw. den Messablauf gemäß einem Ausführungsbeispiel der Erfindung. Das Verfahren 200 weist beispielsweise den folgenden Ablauf auf.

Zunächst wird ein Referenzdatensatz mit Bildinformationen einer ersten Folge 210-1 von Röntgendurchstrahlungsaufnahmen 160 des Prüfkörpers 120 bereitgestellt (Schritt 210). Der Prüfkörper weist dabei einen Ausgangszustand bzw. Grundzustand auf, der beispielsweise einen unbelasteten Zustand oder einen Zustand mit vorgegebener Ausgangsbelastung darstellt. Insbesondere kann die Ausgangsbelastung eine vorgegebene thermische, mechanische oder hydraulische Belastung mit einem konstanten, linearen, periodischen (zyklischen), aperiodischen oder jeglichem anderen zeitlichen Verlauf aufweisen.

Der Referenzdatensatz dient dazu, einen vollständigen Satz von Projektionen 160 des Prüfkörpers 120 im Grundzustand mit hoher Winkelauflösung bereitzustellen und ggf. in einem Speicher abzuspeichern, um diesen mittels einer weiteren Folge von Projektionen 160, die zu einem späteren Zeitpunkt während der Belastung des Prüfkörpers 120 aufgenommen wird, zu aktualisieren und daraus inkrementell ein 3D-Bild zu rekonstruieren.

Die erste Folge 210-1 von Röntgendurchstrahlungsaufnahmen 160 des Prüfkörpers 120 weist eine erste durchschnittliche Winkelschrittweite $\Delta\alpha$ auf, wobei die Winkelschrittweite $\Delta\alpha$ beispielsweise einen Wert zwischen 0,01 und 3°, zwischen 0,1° und 1° oder zwischen 0,2° und 0,5° (wie z.B. 0,45° und 0,225°) aufweist.

Die Winkelschrittweite richtet sich danach, wie viele Röntgendurchstrahlungsaufnahmen 160 für den Referenzdatensatz bzw. dessen erforderliche Auflösung benötigt werden. Insbesondere entsprechen die obigen Werte für die Winkelschrittweite $\Delta\alpha$ einer Anzahl von Röntgendurchstrahlungsaufnahmen 160 im Bereich von 120 bis 36.000, von 360 bis 3600 bzw. von 720 bis 1800 (wie z.B. 800 oder 1600) Projektionen pro Durchlauf.

Bei Ausführungsbeispielen der Erfindung kann die Winkelschrittweite $\Delta\alpha$ 0,45° oder 0,225° betragen, was in einem vollständigen Winkelbereich 152 einer Rotation des Prüfkörpers 120 zwischen 0° und 360° jeweils einer Anzahl von 800 oder 1600 Projektionen 160 entspricht.

Nach Bereitstellen 210 des Referenz-Datensatzes mit Bildinformationen der ersten Folge 210-1 werden Bildinformationen einer zweiten Folge 220-1 von Röntgendurchstrahlungs-aufnahmen 160 des Prüfkörpers 120 erzeugt (Schritt 220). Der Prüfkörper 120 weist dabei einen ersten Zustand auf, der dadurch gekennzeichnet ist, dass der Prüfkörper 120 einer vorgegebenen thermischen, mechanischen oder hydraulischen Belastung mit einem konstanten, linearen, periodischen (zyklischen), aperiodischen oder jeglichem anderen Zeitverlauf ausgesetzt ist.

Insbesondere weist der Zustand des Prüfkörpers 120 unter Belastung beispielsweise eine kontinuierliche oder eine zyklische Belastung auf. Bei Ausführungsbeispielen der Erfindung kann die kontinuierliche Belastungsart eine Druck- oder Zugbelastung, die über die Belastungsmaschine von außen auf den Prüfkörper 120 ausgeübt werden kann, darstellen, während die zyklische Belastungsart durch Schwingspiele realisiert werden kann. Durch die äußere Krafteinwirkung während der Belastung kann ein Zustand in dem Prüfkörpers 120 induziert werden, der beispielsweise eine innere Verformung, Spannung oder Verschiebung aufweist.

Ferner kann der Zustand des Prüfkörpers 120 auch eine aperiodische Belastung, die z.B. durch Stöße oder Schläge von außen auf den Prüfkörper 120 ausgeübt wird, und/oder eine beschleunigte Belastung beispielsweise in Form einer beschleunigten Druck- oder Zugbelastung aufweisen.

Bei weiteren Ausführungsbeispielen ist der Prüfkörper 120 während des Erzeugens 220 der Bildinformationen der zweiten Folge 220-1 einer periodischen (zyklischen) Belastung ausgesetzt, wobei der Schritt des Erzeugens 220 der Bildinformationen der zweiten Folge 220-1 der zyklischen Belastung zeitlich zugeordnet sein kann.

Beispielsweise kann bei einer zyklischen Belastung mit einer Frequenz von a Hz bei einer Umlaufzeit von 1 Sekunde für eine vollständige Rotation bzw. einen Durchlauf des Prüfkörpers 120 in einem Winkelbereich 152 z.B. zwischen 0° und 360° eine Winkelschrittweite von $\Delta\nu$ = 360°/a fest vorgegeben werden, um für jedes Maximum des Belastungszyklus eine Röntgendurchstrahlungsaufnahme 160 zu erzeugen.

Die zweite Folge 220-1 der Röntgendurchstrahlungsaufnahmen 160 des Prüfkörpers 120 weist eine zweite durchschnittliche Winkelschrittweite $\Delta\beta$ auf, wobei die Winkelschrittweite $\Delta\beta$ beispielsweise einen Wert zwischen 0,5° und 90°, zwischen 5° und 15° oder zwischen 30° und 60° aufweist. Die obigen Werte für die Winkelschrittweiten $\Delta\beta$ entsprechen einer Anzahl von Röntgendurchstrahlungsaufnahmen 160 im Bereich von 60 bis 720 Projektionen pro Durchlauf.

Im Vergleich zur ersten durchschnittlichen Winkelschrittweite $\Delta\alpha$ ist die zweite durchschnittliche Winkelschrittweite $\Delta\beta$ größer, so dass die zweite Folge 220-1 mit einer niedrigeren Winkelauflösung als die erste Folge 210-1 erzeugt wird. D.h., der Schritt des Bereitstellens 210 des Referenz-Datensatzes 210-1 entspricht einer "feinen Abtastung", während der Schritt des Erzeugens 220 einer "groben Abtastung" entspricht.

Nach den Schritten des Bereitstellens 210 der ersten Folge 210-1 und des Erzeugens 220 der zweiten Folge 220-1 findet ein Vergleichen 230 der Bildinformationen der zweiten Folge 220-1 jeweils mit den winkelmäßig zugeordneten Bildinformationen der ersten Folge 210-1 mittels einer 2D-Bildkorrelation statt, um ein Vergleichsergebnis 230-1

zu erhalten.

Die digitale Bildkorrelation ist eine effiziente Methode, mit der auf Basis von digitalen Bildinformationen 2- oder 3-dimensionale Bilder, Verschiebungen oder Spannungen ermittelt werden können. Im Folgenden wird beispielhaft die 2D-Bildkorrelation beschrieben (s.

Fig. 2b), was sich jedoch auch auf den dreidimensionalen Fall verallgemeinern lässt.

Die 2D- bzw. 3D-Bildkorrelation beruht darauf, dass eine Maximierung eines Korrelationskoeffizienten C durchgeführt wird, wobei der Korrelationskoeffizient C mittels der Pixel- bzw. Voxel-Intensitäten zugeordneter Teilbereiche einer Mehrzahl von 2D- bzw. 3D-Bildern ermittelt wird.

Aus der Maximierung des Korrelationskoeffizienten C lässt sich die Zuordnungsfunktion bzw. Transformation zwischen den verschiedenen Bildern bestimmen. Ferner ergeben sich die Verschiebungskomponenten u, v und die Verschiebungsgradienten $\frac{\partial u}{\partial \chi}, \frac{\partial u}{\partial \xi}, \frac{\partial v}{\partial \chi}, \frac{\partial v}{\partial \xi}$. Im zweidimensionalen Fall lautet der Korrelationskoeffizient $C_{ij}$ typischerweise:

$$C_{ij} = C_{ij}\left(u, v, \frac{\partial u}{\partial \chi}, \frac{\partial u}{\partial \xi}, \frac{\partial v}{\partial \chi}, \frac{\partial v}{\partial \xi}\right) = 1 - \frac{\sum_i \sum_j \left[F(\chi_i, \chi_j) - \overline{F}\right]\left[G(\chi_i^{*}, \xi_i^{*}) - \overline{G}\right]}{\left(\sum_i \sum_j \left[F(\chi_i, \chi_j) - \overline{F}\right]^2 \left[G(\chi_i^{*}, \chi_j^{*}) - \overline{G}\right]^2\right)^{1/2}} \quad (1)$$

Hierbei ist $F(\chi_i, \xi_j)$ die Pixelintensität oder der Grauwert an einem Punkt $(\chi_i, \xi_j)$ in einem nicht deformierten Bild, $G(\chi_i^{*}, \xi_i^{*})$ die Pixelintensität oder der Grauwert an einem Punkt $(\chi_i^{*}, \xi_i^{*})$ in einem deformierten Bild. $\overline{F}$ und $\overline{G}$ sind die Mittelwerte der Intensitätsmatrizen F und G. Die Koordinaten oder Matrixpositionen $(\chi_i, \xi_j)$ und $(\chi_i^{*}, \xi_i^{*})$ stehen über die Deformation, die zwischen dem nicht deformierten und dem deformierten Bild besteht, miteinander in Beziehung. Findet die Deformation beispielsweise senkrecht zur Beobachtungsachse statt, so kann die Relation zwischen den Koordinaten $(\chi_i, \xi_j)$ und $(\chi_i^{*}, \xi_i^{*})$ durch eine zweidimensionale affine Transformation

$$\chi^{*} = \chi + u + \frac{\partial u}{\partial \chi}\Delta\chi + \frac{\partial u}{\partial \xi}\Delta\xi,$$
$$\xi^{*} = \xi + v + \frac{\partial v}{\partial \chi}\Delta\chi + \frac{\partial v}{\partial \xi}\Delta\xi \quad (2)$$

beschrieben werden. Hierbei stellen u und v die Translationen des Mittelpunkts des Teilbildes in die $\chi$- und $\xi$-Richtung dar, wobei $\Delta\chi$ und $\Delta\xi$ die Entfernungen vom Mittelpunkt des Teilbildes zum Punkt $(\chi, \xi)$ bezeichnen. Folglich ist der Korrelationskoeffizient $C_{ij}$ eine Funktion der Verschiebungskomponenten (u, v, und der Verschicbungsgradienten $\frac{\partial u}{\partial \chi}, \frac{\partial u}{\partial \xi}, \frac{\partial v}{\partial \chi}, \frac{\partial v}{\partial \xi}$).

Zur Durchführung der 2D-Bildkorrelation während des Schritts des Vergleichens 230 können die Bildinformationen der ersten und zweiten Folge 210-1, 220-1 beispielsweise als 2D-Verteilungen von Intensitätswerten vorliegen, wobei die Intensitätswerte durch die auf einem Pixel-Raster 132 des röntgenempfindlichen Detektors 130 empfangenen Röntgenstrahlen 112 hervorgerufen werden.

Bei Ausführungsbeispielen der Erfindung wird die 2D-Bildkorrelation durchgeführt, um eine signifikante Änderung zwischen den Bildinformationen der ersten und zweiten Folge 210-1, 220-1 zu ermitteln, wobei eine signifikante Änderung vorhanden ist, falls das Vergleichsergebnis 230-1 einen Grenzwert T erreicht.

Für den Grenzwert T kann dabei beispielsweise ein Wert nahe bei 1 wie z.B. 0,8; 0,90; 0,95 bzw. 0,99 vorgegeben werden. Unterschreitet der Wert des Vergleichsergebnisses 230-1 wie beispielsweise 0,75; 0,85; 0,90 bzw. 0,95 den Grenzwert T, so liegt z.B. ein positives Vergleichsergebnis 230-1 vor; überschreitet der Wert des Vergleichsergebnisses 230-1 wie beispielsweise 0,85; 0,95; 0,99 bzw. 1 den Grenzwert T, so liegt ein negatives Vergleichsergebnis 230-1 vor. In diesem Zusammenhang bedeutet ein positives Vergleichsergebnis 230-1, dass eine signifikante Änderung vorhanden ist; während ein negatives Vergleichsergebnis 230-1 bedeutet, dass keine signifikante Änderung vorhanden ist. Ferner

kann auch jegliche andere Relation zwischen dem Vergleichsergebnis 230-1 und einer mathematischen Funktion des Grenzwertes T verwendet werden, um ein positives bzw. negatives Vergleichsergebnis 230-1 zu erhalten.

Bei einem Ausführungsbeispiel der Erfindung können die Bildinformationen dadurch verglichen werden, dass pixelweise (z.B. für jedes Pixel zweier Bilder gleicher Dimension und gleicher Anzahl von Pixeln) Korrelationswerte bzw. Korrelationskoeffizienten ermittelt werden und deren Mittelwert bestimmt wird, wobei der Mittelwert zwischen 0 und 1 liegt und ein höherer Wert (d.h. ein Wert nahe bei 1) eine höhere Ähnlichkeit (Korrelation) zwischen den Bildinformationen bedeutet.

In obigem Ausführungsbeispiel weist das Vergleichsergebnis 230-1 beispielsweise eine signifikante Änderung auf, falls das Vergleichsergebnis 230-1 unterhalb des vorgegebenen Grenzwertes (z.B. 0,9) liegt.

Falls das Vergleichsergebnis 230-1 an einer der Winkelpositionen $\beta_i$ den vorgegebenen Grenzwert T erreicht, werden Bildinformationen einer dritten Folge 240-1 von Röntgendurchstrahlungsaufnahmen 160 des Prüfkörpers 120 bereichsweise um die Winkelposition $\beta_i$ erzeugt (Schritt 240). Die dritte Folge 240-1 weist dabei eine dritte durchschnittliche Winkelschrittweite Ay auf, wobei die dritte Winkelschrittweite $\Delta\gamma$ kleiner als die zweite Winkelschrittweite $\Delta\beta$ ist. D.h., der Schritt des Erzeugens 240 der dritten Folge 240-1 erfolgt wiederum mit einer relativ hohen Winkelauflösung, was der Situation einer feinen Abtastung entspricht.

Bei Ausführungsbeispielen der Erfindung weist die dritte Winkelschrittweite $\Delta\gamma$ beispielsweise einen Wert zwischen 0,01° und 5°, zwischen 0,1° und 1° oder zwischen 0,2° und 0,5° auf. Ferner wird beispielsweise die dritte Folge 240-1 in einem Winkelbereich $[\beta_{i-1}, \beta_{i+1}]$ zwischen den Winkelpositionen $\beta_{i-1} = \beta_i - \Delta\beta$ und $\beta_{i+1} = \beta_i + \Delta\beta$ um die Winkelposition $\beta_i$ erzeugt, wobei entweder der gesamte Winkelbereich $[\beta_{i-1}, \beta_{i+1}]$ oder ein Teilbereich des Winkelbereichs $[\beta_{i-1}, \beta_{i+1}]$ zwischen den Winkelpositionen $\beta_{i-1}$ und $\beta_{i+1}$ abgedeckt wird. Falls z.B. $\beta_i$ = 22° und $\Delta\beta$ = 11°, so kann die dritte Folge beispielsweise innerhalb des Winkelbereichs $[\beta_{i-1}, \beta_{i+1}]$ = [11°, 33°] bereichsweise um die Winkelposition $\beta_i$ = 22° erzeugt werden.

Die dritte Winkelschrittweite $\Delta\gamma$ kann beispielsweise den gleichen Wert wie die erste Winkelschrittweite $\Delta\alpha$ aufweisen, so dass der Referenz-Datensatz 210-1 und die dritte Folge 240-1 eine gleiche Winkelauflösung aufweisen.

Die Winkelsprünge zwischen den einzelnen Winkelpositionen oder die durchschnittliche Winkelschrittweite kann beispielsweise fest vorgegeben sein oder während der Datenermittlung dynamisch bzw. variabel vorgegeben werden, um z.B. in einem vorgegebenen Winkelbereich 152 die durchschnittlichen Winkelschrittweiten $\Delta\beta$ und $\Delta\gamma$ dem zeitlichen Verlauf der Belastung des Prüfkörpers 120 zuzuordnen. Hierbei kann die durchschnittliche Winkelschrittweite beispielsweise eine konstante Winkelschrittweite oder eine Winkelschrittweite, die sich vergrößert oder verkleinert, sein. Das Vorgeben der durchschnittlichen Winkelschrittweite ermöglicht es, dass in obigem Ausführungsbeispiel für die dritte Winkelschrittweite $\Delta\gamma$ der gleiche Wert wie für die erste Winkelschrittweite $\Delta\alpha$ vorgegeben werden kann, sogar wenn während der Datenermittlung mögliche absichtliche und unabsichtliche Abweichungen in der tatsächlichen bzw. aktuellen Winkelschrittweite vorkommen.

Bei Ausführungsbeispielen der Erfindung kann aufgrund einer Beobachtung und Untersuchung eines physikalischen Parameters, der von dem Prüfkörper 120 messtechnisch erfassbar ist, einerseits ein Auslösen der Bildaufnahme durch ein externes Auslösesignal ("getriggerte Bildaufnahme") und andererseits ein Winkelbereich und/oder eine Winkelschrittweite der Abtastung ("Intelligente Winkelfindung") aus dem physikalischen Parameter abgeleitet werden. Dieser erfassbare physikalische Parameter kann beispielsweise eine beobachtbare geometrische/mechanische, thermische oder elektrische Veränderung des Prüfkörpers 120 darstellen, die beispielsweise von einer externen Messanordnung erfassbar ist. Die Messanordnung (nicht gezeigt in den Figuren) oder eine der Messanordnung zugeordnete Auswerteeinrichtung (nicht gezeigt in den Figuren) kann dann das externe Auslösesignal für die erfindungsgemäße CT-Anlage zur 3D-Untersuchung eines Prüfkörpers bereitstellen. Insbesondere kann der physikalische Parameter beispielsweise eine Oberflächenspannung sein, die mittels Laser-Interferometrie ermittelt werden kann. Die intelligente Winkelfmdung kann z.B. dadurch erfolgen, dass bei einer Veränderung des physikalischen Parameters die Winkelschrittweite der groben Abtastung verringert wird. Ferner kann beispielsweise unter dem Hinweis, wo eine Veränderung im Prüfkörper 120 stattgefunden hat, aus dem überwachten Parameter oder dessen Änderung ein möglicher Winkelbereich für die Feinabtastung abgeleitet werden.

Ferner kann beispielsweise ein Dehnungsmessstreifen an dem Prüfkörper 120, eine laserbasierte Vermessungsmethode oder jegliche andere Methode der Charakterisierung des Prüfkörpers 120 verwendet werden, um festzustellen, ob bzw. wann eine geometrische Veränderung oder Verformung (z.B. eine Verkürzung oder Ausdehnung) des Prüfkörpers 120 erfolgt, um beispielsweise bei einer messbaren Veränderung die Winkelschrittweiten $\Delta\beta$ und/oder $\Delta\gamma$ der geometrischen Veränderung anzupassen und beispielsweise zu verringern.

Weiterhin wird der Referenz-Datensatz 210-1 basierend auf den Bildinformationen der dritten Folge 240-1 der Röntgendurchstrahlungsaufnahmen 160 aktualisiert (Schritt 250), um einen aktualisierten Referenzdatensatz 250-1 mit Bildinformationen zu erhalten.

Bei Ausführungsbeispielen der Erfindung erfolgt das Aktualisieren (Schritt 250) des Referenzdatensatzes 210-1 dadurch, dass die Bildinformationen der ersten Folge 210-1, die den Bildinformationen der dritten Folge 240-1 winkelmäßig zugeordnet sind, durch die winkelmäßig zugeordneten Bildinformationen der dritten Folge 240-1 ganz oder teilweise ersetzt werden.

Weiterhin (optional) können die Schritte des Erzeugens 220 von Bildinformationen der zweiten Folge 220-1, des Vergleichens 230 der Bildinformationen der zweiten Folge 220-1, des Erzeugens 240 von Bildinformationen der dritten Folge 240-1 und des Aktualisierens 250 des Referenzdatensatzes aufeinander folgend und wiederholt durchgeführt werden, um eine Abfolge 250-2 von (weiteren) aktualisierten Referenzdatensätzen 250-1 mit aktualisierten Bildinformationen von Röntgendurchstrahlungsaufnahmen 160 des Prüfkörpers 120 zu erhalten.

Hierbei wird der Referenzdatensatz aus der Abfolge 250-2 von (weiteren) aktualisierten Referenzdatensätzen ausgewählt und bereitgestellt. D.h., das Verfahren 200 zur Datenermittlung aus Fig. 2a kann so ablaufen, dass der Referenzdatensatz aus der Abfolge 250-2 von (weiteren) aktualisierten Referenzdatensätzen ausgewählt und bereitgestellt wird, und dieser ausgewählte Referenzdatensatz, wie oben beschrieben, wiederum aktualisiert wird (Schritt 250), um einen weiteren aktualisierten Referenzdatensatz 250-1 oder bei wiederholter Ausführung die "Abfolge 250-2 von (weiteren) aktualisierten Referenzdatensätzen" zu erhalten.

Bei Ausführungsbeispielen der Erfindung kann hierbei ein beliebiger Referenzdatensatz aus der Abfolge 250-2 von (weiteren) aktualisierten Referenzdatensätzen ausgewählt und bereitgestellt werden. Der ausgewählte und bereitgestellte Referenzdatensatz ist beispielsweise der letzte (aktuellste) in der Abfolge enthaltene aktualisierte Referenzdatensatz oder ein beliebiger, in der Abfolge enthaltene aktualisierte Referenzdatensatz. So kann beispielsweise ein beliebiger Rücksprung innerhalb der Abfolge 250-2 von (weiteren) aktualisierten Referenzdatensätzen vorgenommen werden, um den als Ausgangspunkt wirksamen Referenzdatensatz auszuwählen und bereitzustellen.

Aus dem Referenzdatensatz mit Bildinformationen der ersten Folge 210-1 wird (optional) ein 3D-Bild 270-1 der inneren Struktur des Prüfkörpers 120 mittels Computertomographie rekonstruiert (Schritt 270).

Schließlich wird (optional) basierend auf der Abfolge 250-2 von (weiteren) aktualisierten Referenzdatensätzen 250-1 mit aktualisierten Bildinformationen mittels Computertomographie eine Mehrzahl (Abfolge bzw. Sequenz) 260-1 von 3D-Bildern rekonstruiert (Schritt 260). Insbesondere kann bei Ausführungsbeispielen der Erfindung ein 3D-Volumen (3D-Bild) aus einem dazu zuvor rekonstruierten 3D-Bild basierend auf den winkelmäßig zugeordneten Bildinformationen der dritten Folge (240-1) und der ersten Folge (210-1) inkrementell rekonstruiert ("inkrementelle Rekonstruktion") und schrittweise aktualisiert werden.

Speziell kann bei Ausführungsbeispielen der Erfindung die CT-Rekonstruktion (Schritt 260) mittels einer Radon-Transformation, einer iterativen CT-Rekonstruktion oder einer

CT-Rekonstruktion mit gefilterter Rückprojektion durchgeführt werden, um eine räumliche Verteilung von Schwächungskoeffizienten über die Volumenelemente (Voxel) des Prüfkörpers 120 aus einer Mehrzahl der Bildinformationen der Röntgendurchstrahlungsaufnahmen 160 zu erhalten. In der Praxis kann eine stabilisierte und diskretisierte Form der inversen Radon-Transformation verwendet werden, die auch als gefilterte Rückprojektion bezeichnet wird. Dabei wird die Rückprojektion z.B. mittels einer Fourier-Transformation gefiltert, um Artefakte bei der Rücktransformation zu unterdrücken.

Im Einzelnen kann die inkrementelle Rekonstruktion basierend auf den Differenzen aus den winkelmäßig zugeordneten (beispielsweise gefilterten) Projektionen der dritten Folge (240-1) und der ersten Folge (210-1) durchgeführt werden, um ein neues, aktualisiertes 3D-Bild zu erhalten. Ferner kann die inkrementelle Rekonstruktion aufeinander folgend und wiederholt durchgeführt werden, um die Abfolge (Sequenz) 260-1 von 3D-Bildern zu erhalten.

Bei alternativen Ausführungsbeispielen der Erfindung kann nach dem Schritt des Erzeugens 240 der dritten Folge 240-1 ein Vergleichen 280 der Bildinformationen der dritten Folge 240-1 jeweils mit den winkelmäßig zugeordneten Bildinformationen der ersten Folge 210-1 mittels einer 2D-Bildkorrelation erfolgen, um ein weiteres Vergleichsergebnis 280-1 zu erhalten, und, falls das weitere Vergleichsergebnis 280-1 an einer der Winkelpositionen $\gamma_i$ der dritten Folge 240-1 einen Grenzwert erreicht, den Referenzdatensatz aus der ersten Folge 210-1 um die der Winkelposition $\gamma_i$ zugeordneten Bildinformationen der dritten Folge zu aktualisieren (Schritt 290). Die Ausführungsweise ist hierbei entsprechend der im Vorhergehenden beschriebenen.

In anderen Worten, es kann (optional) ein zusätzlicher Vergleich der Projektionen der feinen Abtastung mit den winkelmäßig zugeordneten Projektionen des Referenzdatensatzes 210-1 durchgeführt werden (vgl. Fig. 2c), um den Referenzdatensatz 210-1 nur um diejenigen Projektionen der feinen Abtastung zu aktualisieren, bei denen eine signifikante Veränderung gegenüber den Projektionen des Referenzdatensatzes 210-1 ermittelt wird, was die zu verarbeitende Datenmenge weiterhin reduzieren kann.

Fig. 2c zeigt ein Ausführungsbeispiel der Erfindung, bei der beispielsweise ein Bruchtest durchgeführt wird, wobei das Ausführungsbeispiel auch auf jeglichen anderen Belastungstest anwendbar ist.

Hierbei wird von dem Testobjekt zunächst ein vollständiger Datensatz 210-1 von Röntgendurchstrahlungsbildern 160 mit hoher Winkelauflösung aufgenommen (Schritt 210) und rekonstruiert (Schritt 270). Denkbar sind hier beispielsweise Datensätze mit 800 oder 1600 Projektionen, die einer ersten Winkelschrittweite $\Delta\alpha$ von beispielsweise 0,45° bzw. 0,225° wie oben beschrieben entsprechen, oder jede andere Winkelschrittweite $\Delta\alpha$. Dieser Datensatz 210-1 dient im Folgenden als Referenz. Unter Belastung wird nun eine Ermüdung des Materials provoziert, während permanent einzelne Durchstrahlungsbilder in größeren Winkelschritten (z.B. 11°) aufgenommen (Schritt 220) und mit dem Referenz-Datensatz 210-1 verglichen werden (Schritt 230).

Diese Bildaufnahme findet beispielsweise getriggert (synchronisiert) statt. Das bedeutet, dass bei zyklischer Belastung jede Projektion zu einem fest definierten Zeitpunkt im Belastungszyklus aufgenommen wird.In anderen Worten, in diesem Zusammenhang sind die Bildaufnahme und die Zyklen (Perioden) der Belastung zeitlich synchronisiert. Somit wird gewährleistet, dass die Projektionen aus ähnlichen Winkeln vergleichbar sind und Änderungen im Objekt optimal detektiert werden können.

Jede aufgenommene Projektion wird mit der Projektion aus demselben bzw. dem jeweils zugeordneten Winkel des vorherigen Datensatzes, bzw. des Referenz-Datensatzes 210-1 verglichen (Schritt 230), um Veränderungen zu detektieren. Hierbei werden unter zugeordneten Winkeln diejenigen Winkel verschiedener Datensätze bezeichnet, die innerhalb einer vorgegebenen Abweichung (Toleranz) wie beispielsweise einem Toleranzbereich zwischen $\pm 0{,}001°$ und $\pm 0{,}005°$; zwischen $\pm 0{,}01°$ und $\pm 0{,}05°$ oder zwischen $\pm 0{,}05°$ und $\pm 0{,}1°$ gleich sind. Dies geschieht mittels einer zweidimensionalen Bildkorrelation. Auf diese Art und Weise wird ein Maß für die Ähnlichkeit der beiden Projektionen gefunden. Werden zwei pixelweise identische Projektionen miteinander verglichen, liefert die Bildkorrelation den Wert 1. Dieser Fall wird jedoch in der Praxis schon aufgrund des Bildrauschens nicht auftreten, selbst wenn sich das Objekt 120 nicht verändert hat. Es ergibt sich dann allerdings ein Wert nahe bei 1. Anhand eines geeigneten Schwellwerts bzw. Grenzwertes T wie im Vorhergehenden beschrieben wird nun ermittelt, ob relevante Änderungen im Objekt 120 aufgetreten sind.

Kann eine signifikante Veränderung in der Projektion gegenüber dem Referenz-Datensatz 210-1 bzw. dem vorherigen Datensatz festgestellt werden, so wird "an dieser Stelle" das Testobjekt 120 wiederum in kleineren Winkelschritten aufgenommen (Schritt 240). Die entsprechenden Projektionen werden im Referenz-Datensatz 210-1 ausgetauscht (Schritt 250, Fig. 2a) und z.B. inkrementell rekonstruiert ("inkrementelle Rekonstruktion"), um ein 3D-Volumen (darstellbar als 3D-Bild) zu erhalten.

Inkrementelle Rekonstruktion heißt in diesem Zusammenhang, dass zunächst das Prüfobjekt 120 in groben Winkelschritten bzw. einer niedrigen Winkelauflösung abgetastet wird und erst bei Detektion einer Veränderung eine feinere Abtastung mit einer höheren Winkelauflösung erfolgt, woraus der Referenzdatensatz 210-1 für jede Wiederholung schrittweise aktualisiert und daraus jeweils ein 3D-Bild bzw. 3D-Volumen (z.B. inkrementell) rekonstruiert wird. So kann das 3D-Bild aus einem dazu zuvor rekonstruierten 3D-Bild basierend auf den winkelmäßig zugeordneten Bildinformationen der dritten Folge (240-1) und der ersten Folge (210-1) inkrementell rekonstruiert und schrittweise aktualisiert werden. Hierbei werden beispielsweise die gegenüber den Referenzprojektionen winkelmäßig zugeordneten, veränderten Projektionen der feinen Abtastung (beispielsweise durch Differenzbildung aus den veränderten Projektionen und den winkelmäßig zugeordneten Referenzprojektionen) bei der gefilterten Rückprojektion in das zuvor erhaltene, rekonstruierte Volumen hineingerechnet. Solch eine inkrementelle Rekonstruktion wird dadurch ermöglicht, dass beispielsweise die gefilterte Rückprojektion eine linear invariante Operation darstellt.

Zusammenfassend kann also festgestellt werden, dass einerseits beispielsweise die Referenzprojektionen zunächst durch die winkelmäßig zugeordneten, veränderten Projektionen im Referenzdatensatz ersetzt werden können, wobei aus dem (z.B. kompletten) aktualisierten Referenzdatensatz dann das rekonstruierte Volumen berechnet werden kann.

Andererseits kann bei der "inkrementellen" Rekonstruktion auf der Basis eines bereits rekonstruierten Volumens ein neues Volumen unmittelbar mit Hilfe der veränderten Projektionen und deren winkelmäßig zugeordneten Referenzprojektionen rekonstruiert werden, ohne dass dabei die übrigen Referenzprojektionen zur Rekonstruktion des neuen Volumens berücksichtigt werden müssen.

Diese Art der inkrementellen Rekonstruktion, bei der die veränderten Projektionen und deren winkelmäßig zugeordneten Referenzprojektionen rechenunaufwändig in die 3D-Rekonstruktion des neuen Volumens einbezogen werden können, ermöglicht es, eine nahezu Echtzeitdarstellung in 3D zur dynamischen Untersuchung des Prüfkörpers zu erreichen. In anderen Worten, Ausführungsbeispiele der vorliegenden Erfindung schaffen somit eine effiziente Vorgehensweise, mit der man in (nahezu) Echtzeit beobachten kann, wie sich das Volumen des Prüfkörpers im Laufe der Untersuchungszeit verändert. Je geringer der angefallene Datenumfang und damit der Rechenaufwand zur Berücksichtigung von Veränderungen im Prüfkörper sind, umso schneller (d.h. möglichst in Echtzeit) kann die 3D-Dastellung berechnet und wiedergegeben werden.

Durch Fortführen dieses Verfahrens ergibt sich eine zeitlich aufgelöste Sequenz 260-1 von Volumina, die Informationen über den jeweils aktuellen Zustand der Materialbeanspruchung des Prüfkörpers 120, z.B. des Risses, beinhalten. Durch die Beschränkung der zu speichernden Durchstrahlungsbilder auf solche Projektionen 160, die eine Veränderung gegenüber dem vorhergehenden Zustand des Objekts 120 aufweisen, wird die zu bewältigende Datenmenge auf ein Minimum reduziert.

Um möglichst viel Information über die tatsächliche Änderung im Objekt 120 zu erhalten, ist das folgende Aufnahmeverfahren als weitere optionale Vorgehensweise denkbar. Anstatt allein um den Winkel herum die Projektionen in kleineren Winkelschritten aufzunehmen, unter dem die Änderung detektiert wurde, ist es denkbar, entgegen der gängigen Aufnahmeprozedur zusätzlich in großen Winkelschritten (z.B. 45°, 90°, 180°) zu springen und dort wiederum

eine feine Abtastung vorzunehmen. Somit wird die Information über die Änderung im Objekt 120 maximiert. Die tatsächlichen Winkelsprünge können während der Aufnahmeprozedur dynamisch, beispielsweise über eine Intervallschachtelung, bestimmt werden.

Insbesondere werden bei einer Intervallschachtelung die Winkelsprünge immer kleiner, so dass die Aufnahmeprozedur eine immer feiner werdende Abtastung aufweist. Als Beispiel können die jeweiligen Winkelschrittweiten zwischen zwei aufeinander folgenden Winkelpositionen so gewählt werden, dass zunächst ausgehend von einer groben Abtastung ein Winkelsprung von 11° vorgegeben wird, danach ein Winkelsprung von 5°, wiederum danach ein Winkelsprung von 1° usw., bis eine kleinste Winkelschrittweite von beispielsweise 0,01 ° entsprechend einer feineren Abtastung erreicht ist.

Insbesondere zeigt Fig. 2c beispielhaft eine Wiederholung des Verfahrens 200 zur Datenermittlung, das solange durchgeführt wird, bis ein bestimmtes Ereignis (Abbruchbedingung, z.B. eine Zerstörung oder ein Bruch des Prüfkörpers 120, eine vorgegebene Anzahl von Wiederholungen des Verfahrens 200, eine vorgegebene Anzahl von Durchläufen von vollständigen CT-Rotationen, eine vorgegebene Anzahl von Belastungszyklen, eine vorgegebene Datenmenge akkumulierter Bildinformationen oder ein vorgegebener Zeitpunkt) eintritt.

Anwendungsbeispiele der inkrementellen Rekonstruktion können zyklische Belastungen (Schwingspiele) oder kontinuierliche Belastungen (Zugproben), oder jede andere Belastungsart sein. Denkbar ist es, die Probe 120 zunächst mit einem definierten Anriss zu versehen und den räumlichen und zeitlichen Verlauf dieses Risses zu beobachten. Alternativ können Projektionen 160 der unversehrten Probe 120 aufgenommen werden, um anhand von Änderungen in der Dichteverteilung Brüche oder Rissentstehungen zu untersuchen.

## Datenauswertung einer Abfolge von 3D-Bildern mittels einer 3D-Bildkorrelation (Auswertungsablauf)

Die obigen Ausführungen bezogen sich auf ein Verfahren zur Datenermittlung 200 (Messablauf), während im Folgenden ein Verfahren zur Datenauswertung 300 bzw. der Auswertungsablauf basierend auf der Sequenz 260-1 der rekonstruierten Volumendatensätze bzw. 3D-Bilder beschrieben wird.

Dabei ist insbesondere festzustellen, dass bei der erfindungsgemäßen Vorgehensweise zur Datenermittlung (Verfahren 200) und zur Datenauswertung (Verfahren 300) beide Verfahren jeweils einzeln ausgeführt oder vorteilhaft kombiniert werden können.

An dieser Stelle sei darauf hingewiesen, dass es sich bei den im Folgenden vorkommenden Bezeichnungen "3D-Bild" bzw. "3D-Teilbild" um ein rekonstruiertes 3D-Volumen bzw. 3D-Teilvolumen handelt. Dabei bezeichnet "3D-Teilbild" ein dreidimensionales Teilvolumen (Volumenausschnitt) bestehend aus einer Mehrzahl von Volumenelementen (Voxeln).

Fig. 3a zeigt ein Flussdiagramm des Verfahrens 300 zum Auswerten einer Sequenz 260-1 von 3D-Bildern mittels einer 3D-Bildkorrelation, gemäß einem weiteren Ausführungsbeispiel der Erfindung. Das Verfahren 300 zum Auswerten weist beispielsweise die folgenden Schritte auf

Zunächst wird eine Sequenz 260-1 von 3D-Bildern beispielsweise aus einem Speicher bereitgestellt (Schritt 310), wobei jedes 3D-Bild eine Mehrzahl von Volumenelementen (Voxeln) aufweist. Dabei können beispielsweise die einzelnen 3D-Bilder gleiche Dimensionen und gleiche Anzahl von Voxeln aufweisen. Ferner kann bei Ausführungsbeispielen der Erfindung die Sequenz 260-1 durch das Verfahren 200 zur Datenermittlung bereitgestellt werden.

Nach Bereitstellen 310 der Sequenz 260-1 wird ein erstes 3D-Referenz-Teilbild 320-1 aus einem ersten 3D-Bild der Sequenz 260-1 ausgewählt (Schritt 320). Insbesondere können dabei beispielsweise wiederkehrende Bildstrukturen aus der Sequenz 260-1 verwendet werden. Als wiederkehrende Bildstrukturen können beispielsweise Materialeinschlüsse, Markierungen auf der Oberfläche oder im Innern des Prüfkörpers 120 (z.B. punktförmige Markierungen, regelmäßige oder zufällig verteilte Mustermarkierungen oder jegliche andere Art von Markierungen) oder vorhandene innere Materialstrukturen (z.B. Korngrenzen bei Aluguss im Bereich von beispielsweise 20 bis 30 $\mu$m, Fasern von einer Größe von etwa 7 $\mu$m oder Phasenübergänge im Material) des Prüfkörpers 120 verwendet werden. Ferner können dazu auch auf der Oberfläche oder im Inneren des Prüfkörpers 120 angebrachte Hilfskörper (Einschlüsse) beispielsweise im Mikrometerbereich und insbesondere bereits vorhandene oder künstlich erzeugte Fehlstellen, Bruchstellen oder Bauteilschädigungen des Prüfkörpers 120 dienen.

Weiterhin wird eine 3D-Bildkorrelation zwischen dem ersten 3D-Referenz-Teilbild 320-1 und zugeordneten 3D-Teilbildern für jedes Volumen des zweiten 3D-Bildes der Sequenz 260-1 im Frequenzraum durchgeführt (Schritt 330), um eine 3D-Verteilung 330-1 von Korrelationswerten über die Volumenelemente des zweiten 3D-Bildes zu bestimmen.

Im Einzelnen werden hierbei durch Voxel-weise Überlagerung zweier Volumina gleicher Größe diese auf ihre Ähnlichkeit geprüft. Die digitale Bildkorrelation stellt hierbei ein Maß zwischen 0 und 1 für die Ähnlichkeit der beiden Volumina bereit. Sind die Volumina identisch, ergibt sich der Wert 1.

Weiterhin wird ein aktualisiertes 3D-Referenz-Teilbild 340-1 ermittelt (Schritt 340), wobei das aktualisierte 3D-Referenz-Teilbild 340-1 diejenigen Volumenelemente des zweiten 3D-Referenz-Teilbildes, bei denen die Korrelationswerte je nach Anforderung einen Grenzwert unterschreiten oder überschreiten, aufweist.

Bei Ausführungsbeispielen der Erfindung wird der Schritt des Ermittelns 340 des aktualisierten 3D-Referenz-Teilbildes 340-1 dadurch realisiert, dass das aktualisierte 3D-Referenz-Teilbild 340-1 speziell diejenigen Volumenelemente aufweist, bei denen Korrelationswerte ihr relatives Maximum erreichen. Hierbei kann das Maximum der Korrelationswerte der 3D-Verteilung 330-1 beispielsweise über einen Polynomfit derselben ermittelt werden.

Das Maximum wird dabei beispielsweise ermittelt, dass ausgehend von jedem lokalen Maximum im Polynomfit die Differenz der Maximalwerte und der Werte von unmittelbar benachbarten Voxeln bestimmt wird. Falls dabei eine vorgegebene Anzahl von Differenzwerten in einem bestimmten Bereich unter einer vorgegebenen Schwelle liegt (z.B. unter 0,1), wird das relative Maximum aus diesem Bereich um die zugehörigen Voxel bestimmt.

Bei Ausführungsbeispielen der Erfindung kann dadurch entweder eine Selbstähnlichkeit oder eine signifikante Änderung (insbesondere in Form von visuellen Veränderungen ausgezeichneter bzw. wiederkehrender Bildstrukturen) zwischen den aktualisierten 3D-Referenz-Teilbildern 340-1 in der Sequenz 260-1 von 3D-Bildern dargestellt werden.

Bei Ausführungsbeispielen der Erfindung gemäß Fig. 3b kann der Schritt des Rekonstruierens 260 der Sequenz 260-1 von 3D-Bildern dadurch durchgeführt werden, dass bei einer detektierten Veränderung entweder anhand der fein abgetasteten Messdaten sofort eine Rekonstruktion angefertigt wird (s. Fig. 3b (1)) oder aber die Projektionen mit ihren Informationen zu Zeitpunkt und Winkelposition zwischengespeichert werden und erst nach Beenden des Verfahrens 200 der Datenermittlung (beispielsweise nach einer Zerstörung oder eines Bruchs des Prüfkörpers 120) eine Offline-Rekonstruktion stattfindet (s. Fig. 3b (2)). In beiden Fällen wird die Sequenz 260-1 der rekonstruierten Volumina mittels einer 3D-DIC ausgewertet.

Die obige Abbruchbedingung im Verfahren 200 zur Datenermittlung kann dabei wiederum über ein bestimmtes Ereignis festgelegt werden wie z.B. eine Zerstörung oder ein Bruch des Prüfkörpers 120, eine vorgegebene Anzahl von Wiederholungen des Verfahrens 200, eine vorgegebene Anzahl von Durchläufen von vollständigen CT-Rotationen, eine vorgegebene Anzahl von Belastungszyklen, eine vorgegebene Datenmenge akkumulierter Bildinformationen oder ein Eintreten eines vorgegebenen Zeitpunkts.

Im Anwendungsfall wird eine für die Beobachtung von Schädigungsprozessen relevante Stelle im Volumen als Referenz 320-1 definiert. Durch eine Voxel-weise Abtastung des nächsten rekonstruierten Volumens mit dem Referenzteilvolumen 320-1 der vorhergehenden Aufnahme ergibt sich eine Verteilung 330-1 von Korrelationswerten über das Volumen. Mit einer geeigneten Fitfunktion, z.B. obigem Polynomfit, wird das Maximum der Korrelationswerte ermittelt. Die Stelle, an denen die Korrelationswerte ihr Maximum annehmen, gilt als Position des Teilvolumens im nächsten Volumen. Des Weiteren wird diese Stelle als neue Referenz 340-1 definiert. Im Falle der Beobachtung einer Rissausbreitung kann auf diese Art und Weise der zeitliche Verlauf des Risses im Raum verfolgt werden.

Als Referenz 320-1, 340-1 für das nächste rekonstruierte Volumen dienen hierbei wiederkehrende Bildstrukturen. Insbesondere können dies ggf. die Spitze des zu Beginn des Versuchs angebrachten Anrisses sein oder auch innere Materialstrukturen des Objekts 120.

Bei Ausführungsbeispielen der Erfindung wird die 3D-Bildkorrelation beim Schritt des Durchführens 330 der 3D-Bildkorrelation mittels einer Fourier-Transformation vorteilhaft im Frequenzraum durchgeführt (Fig. 3c). Das Prinzip beim Schritt des Durchführens 330 der 3D-Bildkorrelation mittels der Fourier-Transformation ist, dass dadurch eine äquivalente Darstellung der Bildinformationen der Röntgendurchstrahlungsaufnahmen 160 im Ortsraum und im Frequenzraum erzielt werden kann. Dabei kann die 3D-Bildkorrelation mathematisch gesehen durch eine Faltung dargestellt werden, wobei die Faltung im Ortsraum vorteilhafterweise in eine Multiplikation 360 im Frequenzraum überführt werden kann.

Im Einzelnen werden dazu zunächst das erste 3D-Referenz-Teilbild 320-1 und zugeordnete 3D-Teilbilder 320-2 für jedes Volumenelement des zweiten 3D-Bildes der Sequenz 260-1 von 3D-Bildern mittels einer Fourier-Transformation 350 in den Frequenzraum überführt, um deren Fourier-Transformierte 350-1,350-2 zu erhalten (Schritt 350).

Daraufhin wird eine Multiplikation 360 zwischen den Fourier-Transformierten 350-1,350-2 im Frequenzraum durchgeführt, um ein Multiplikationsergebnis 360-1 zu erhalten. Schließlich wird das Multiplikationsergebnis 360-1 mittels einer inversen Fourier-Transformation 370 wiederum in den Ortsraum überführt, um die 3D-Verteilung 330-1 der Korrelationswerte über die Volumenelemente des zweiten 3D-Bildes zu erhalten.

Der Schritt des Durchführens 330 wird vorteilhafterweise erst ab einer vorgegebenen Größe des ersten 3D-Referenz-Teilbildes 320-1 ("Faltungskern") durchgeführt, so dass ein Vorteil gegenüber der Berechnung der 3D-Bildkorrelation im Ortsraum erzielt werden kann.

In anderen Worten, obige 3D-Bildkorrelation ähnelt in ihrem Prinzip einer Faltung im mathematischen Sinne. Durch eine Überführung der Volumina in den Frequenzraum kann ein Geschwindigkeitsvorteil gegenüber der Berechnung im Ortsraum erzielt werden. Dieser Vorteil wird allerdings erst ab einer bestimmten Größe des relevanten Teilvolumens erzielt, da die Überführung in den Frequenzraum mittels einer Fourier-Transformation ebenfalls einen Rechenaufwand mit sich bringt.

Wie oben erwähnt, kann das Verfahren 200 zur Datenermittlung und das Verfahren 300 zur Datenauswertung jeweils einzeln ausgeführt oder vorteilhaft kombiniert werden.

Fig. 4 zeigt ein Flussdiagramm des Verfahrens 400 zur zerstörungsfreien 3D-Untersuchung des Prüfkörpers

120, gemäß der Kombination der beiden Verfahren. Hierbei weist das Verfahren 400 beispielsweise die folgenden Schritte auf.

Zunächst wird in einem Verfahren 200 zur Datenermittlung für die zerstörungsfreie 3D-Untersuchung des Prüfkörpers 120 eine Abfolge 260-1 von aktualisierten 3D-Bildern des

Prüfkörpers 120 erzeugt. Ferner wird in einem weiteren Verfahren 300 zum Auswerten einer Abfolge 260-1 von 3D-Bildern mittels einer 3D-Bildkorrelation eine Abfolge 340-2 von aktualisierten 3D-Referenz-Teilbildern erhalten.

Obwohl die vorhergehenden Aspekte der vorliegenden Erfindung im Zusammenhang mit einem oder als ein Verfahrensschritt beschrieben wurden, versteht es sich, dass diese Aspekte auch eine Beschreibung eines entsprechenden Blocks oder Details oder Merkmals einer entsprechenden Vorrichtung darstellen. Im folgenden wird kurz auf diese entsprechende Vorrichtung eingegangen.

Unter Bezugnahme auf die im Vorhergehenden dargestellten Konzepte zur Datenermittlung bzw. Datenauswertung wird nochmals bezugnehmend auf Fig. 1 auf die spezifische Realisierung und Funktionsweise der dort dargestellten erfindungsgemäßen Vorrichtung 100 für die zerstörungsfreie 3D-Untersuchung des Prüfkörpers 120 mittels Computertomographie eingegangen. Die Vorrichtung 100 kann folgendermaßen realisiert sein. Insbesondere weist die Vorrichtung 100 eine Einrichtung 105 zum Erzeugen von Bildinformationen auf. Ferner ist der Einrichtung 105 zum Erzeugen von Bildinformationen eine Verarbeitungseinrichtung 170 und eine mit der Verarbeitungseinrichtung 170 gekoppelte Bereitstellungseinrichtung 180 zugeordnet.

Die Einrichtung 180 zum Bereitstellen des Referenzdatensatzes 210-1 ("Bereitstellungseinrichtung") ist ausgebildet, um die Bildinformationen der Projektionen 160 der ersten Folge 210-1 des Prüfkörpers 120 zu liefern und der Verarbeitungseinrichtung 170 bereitzustellen. Hierbei kann die Einrichtung 180 zum Bereitstellen des Referenzdatensatzes 210-1 beispielsweise der CT-Anlage 105 entsprechen oder beispielsweise einen Speicher darstellen, in dem die relevanten Bildinformationen z.B. in digitaler Form, bereits abgespeichert sind. Die beispielsweise digitalen Bildinformationen können über eine Schnittstelle auf die Verarbeitungseinrichtung 170 übertragen werden.

Die Einrichtung 105 zum Erzeugen von Bildinformationen ist ausgebildet, um die Bildinformationen der zweiten Folge 220-1 und der dritten Folge 240-1 von Röntgendurchstrahlungsaufnahmen 160 jeweils mit den Winkelschrittweiten $\Delta\beta$ und $\Delta\gamma$ wie im Vorhergehenden beschrieben zu erzeugen. Im Einzelnen weist die Einrichtung 105 eine Messvorrichtung zum Erzeugen von Bildinformationen einschließlich der Röntgenstrahlungsquelle 110, des Prüfkörpers 120 und des röntgenempfindlichen Detektors 130 auf. Die mittels der Einrichtung 105 erzeugten Bildinformationen können über eine Schnittstelle auf die Verarbeitungseinrichtung 170 übertragen werden.

Die Verarbeitungseinrichtung 170 ist ausgebildet, um die Bildinformationen der zweiten Folge 220-1 jeweils mit den winkelmäßig zugeordneten Bildinformationen der ersten Folge 210-1 mittels der 2D-Bildkorrelation wie im Vorhergehenden beschrieben zu vergleichen und um den Referenzdatensatz 210-1 basierend auf den Bildinformationen der dritten Folge 240-1 von Röntgendurchstrahlungsaufnahmen 160 zu aktualisieren, um einen aktualisierten Referenzdatensatz zu erhalten. Insbesondere ist die Verarbeitungseinrichtung 170 ausgebildet, um die empfangenen Daten aus Bildinformationen zu verarbeiten und basierend auf diesen Daten die Einrichtung 105 zum Erzeugen von Bildinformationen anzusteuern und zu überwachen. Beispielsweise kann mittels der Verarbeitungseinrichtung 170 die Ansteuerung und Überwachung zur Drehung des Prüfkörpers 120, zur Belastung des Prüfkörpers 120 und zur zeitlichen Synchronisierung des Systems aus Röntgenstrahlungsquelle 110 und röntgenempfindlichen Detektor 130 mit der periodischen (zyklischen) Belastung des Prüfkörpers 120, d.h. zum "Triggern" (Synchronisieren) der Bildaufnahme auf den Belastungszyklus, erfolgen.

Ferner kann (optional) die Verarbeitungseinrichtung 170 auch ausgebildet sein, um die 3D-Bildauswertung wie im Vorhergehenden beschrieben durchzuführen. In diesem Fall weist die Verarbeitungseinrichtung 170 beispielsweise eine zusätzliche Anzeige 190 (Display) auf, mit dem die ausgewerteten Bilder z.B. dreidimensional in Graustufen oder farblich dargestellt werden können.

Ein Ausführungsbeispiel der Erfindung schafft ein Verfahren 200 zur Datenermittlung für eine zerstörungsfreie 3D-Untersuchung eines Prüfkörpers 120 mittels Computer-Tomographie mit folgenden Schritten: Bereitstellen 210 eines Referenzdatensatzes 210-1 mit Bildinformationen einer ersten Folge 210-1 von Röntgendurchstrahlungsaufnahmen 160 des Prüfkörpers 120, wobei die erste Folge 210-1 von Röntgendurchstrahlungsauf nahmen 160 eine erste durchschnittliche Winkelschrittweite $\Delta\alpha$ aufweist; Erzeugen 220 von Bildinformationen einer zweiten Folge 220-1 von Röntgendurchstrahlungsaufnahmen 160 des Prüfkörpers 120, der einen ersten Zustand aufweist, mit einer durchschnittlichen Winkelschrittweite $\Delta\beta$, wobei die zweite Winkelschrittweite $\Delta\beta$ größer als die erste Winkelschrittweite $\Delta\alpha$ ist; Vergleichen 230 der Bildinformationen der zweiten Folge 220-1 von Röntgendurchstrahlungsaufnahmen 160 jeweils mit den winkelmäßig zugeordneten Bildinformationen der ersten Folge 210-1 von Röntgendurchstrahlungsaufnahmen 160 mittels einer 2D-Bildkorrelation, um ein Vergleichsergebnis 230-1 zu erhalten; falls das Vergleichsergebnis 230-1 an einer Winkelposition $\beta_i$ der zweiten Folge 220-1 einen Grenzwert erreicht, Erzeugen 240 von Bildinformationen einer dritten Folge 240-1 von Röntgendurchstrahlungsaufnahmen 160 des Prüfkörpers 120 bereichsweise um die Winkelposition $\beta_i$ und mit einer dritten durchschnittlichen Winkelschrittweite $\Delta\gamma$, wobei die dritte Winkelschrittweite $\Delta\gamma$ kleiner als die zweite Winkelschrittweite $\Delta\beta$ ist; und Aktualisieren 250 des Referenzdatensatzes 210-1 basierend auf den Bildinformationen

der dritten Folge 240-1 von Röntgendurchstrahlungsaufnahmen 160, um einen aktualisierten Referenzdatensatz 250-1 zu erhalten.

Bei einem bevorzugten Ausführungsbeispiel des Verfahrens basieren die Bildinformationen des Referenzdatensatzes 210-1 auf einem sich in einem Ausgangszustand/Grundzustand befindlichen Prüfkörper 120.

Bei einem weiteren bevorzugten Ausführungsbeispiel des Verfahrens werden die Schritte des Erzeugens 220 von Bildinformationen einer zweiten Folge 220-1, des Vergleichens 230 der Bildinformationen der zweiten Folge 220-1, des Erzeugens 240 von Bildinformationen einer dritten Folge 240-1 und des Aktualisierens 250 des Referenzdatensatzes 210-1 aufeinander folgend und wiederholt durchgeführt, um eine Abfolge 250-2 von weiteren aktualisierten Referenzdatensätzen zu erhalten, ferner mit folgendem Schritt: Auswählen und Bereitstellen des Referenzdatensatzes aus der Abfolge von weiteren aktualisierten Referenzdatensätzen.

Ein weiteres bevorzugtes Ausführungsbeispiel des Verfahrens weist folgenden Schritt auf: Rekonstruieren 260 einer Mehrzahl 260-1 von 3D-Bildern basierend auf der Abfolge 250-2 von weiteren aktualisierten Referenzdatensätzen.

Bei einem weiteren bevorzugten Ausführungsbeispiel des Verfahrens wird der Schritt des Rekonstruierens 260 mittels einer Radon-Transformation, einer iterativen CT-Rekonstruktion oder einer CT-Rekonstruktion mit gefilterter Rückprojektion durchgeführt.

Bei einem weiteren bevorzugten Ausführungsbeispiel des Verfahrens wird ein 3D-Bild aus einem dazu zuvor rekonstruierten 3D-Bild basierend auf den winkelmäßig zugeordneten Bildinformationen der dritten Folge 240-1 und der ersten Folge 210-1 inkrementell rekonstruiert.

Bei einem weiteren bevorzugten Ausführungsbeispiel des Verfahrens weist der Schritt des Aktualisierens 250 des Referenzdatensatzes 210-1 ferner folgenden Teilschritt auf: Ersetzen zumindest eines Teilsatzes derjenigen Bildinformationen der ersten Folge 210-1, die den Bildinformationen der dritten Folge 240-1 winkelmäßig zugeordnet sind, durch die Bildinformationen der dritten Folge 240-1.

Ein weiteres bevorzugtes Ausführungsbeispiel des Verfahrens weist ferner folgenden Schritt auf: Vergleichen 280 der Bildinformationen der dritten Folge 240-1 jeweils mit den winkelmäßig zugeordneten Bildinformationen der ersten Folge 210-1 mittels einer 2D-Bildkorrelation, um ein weiteres Vergleichsergebnis 280-1 zu erhalten; und falls das weitere Vergleichsergebnis 280-1 an einer Winkelposition $\gamma_i$ einen Grenzwert erreicht, Aktualisieren 290 des Referenzdatensatzes 210-1 um die der Winkelposition $\gamma_i$ zugeordneten Bildinformationen der dritten Folge 240-1.

Bei einem weiteren bevorzugten Ausführungsbeispiel des Verfahrens stellt der Ausgangszustand des Prüfkörpers 120 einen unbelasteten Zustand dar.

Bei einem weiteren bevorzugten Ausführungsbeispiel des Verfahrens weist der Ausgangszustand des Prüfkörpers 120 eine vorgegebene thermische, mechanische oder hydraulische Belastung mit einem konstanten, linearen, periodischen/zyklischen oder aperiodischen zeitlichen Verlauf auf.

Bei einem weiteren bevorzugten Ausführungsbeispiel des Verfahrens weist der erste Zustand eine thermische, mechanische oder hydraulische Belastung mit einem konstanten, linearen, periodischen/zyklischen oder aperiodischen Zeitverlauf auf.

Bei einem weiteren bevorzugten Ausführungsbeispiel des Verfahrens weist die erste Winkelschrittweite $\Delta\alpha$ einen Wert zwischen 0,01° und 3°, zwischen 0.1° und 1° oder zwischen 0,2° und 0,5° auf.

Bei einem weiteren bevorzugten Ausführungsbeispiel des Verfahrens weist die zweite Winkelschrittweite $\Delta\beta$ einen Wert zwischen 0,5° und 90°, zwischen 5° und 15° oder zwischen 30° und 60° auf.

Bei einem weiteren bevorzugten Ausführungsbeispiel des Verfahrens weist die dritte Winkelschrittweite $\Delta\gamma$ einen Wert zwischen 0,01° und 3°, zwischen 0,01° und 1° oder zwischen 0,2° und 0,5° auf.

Bei einem weiteren bevorzugten Ausführungsbeispiel des Verfahrens weist die 2D-Bildkorrelation ein Vergleichen 230, 280 von Bildinformationen der Röntgendurchstrahlungsaufnahmen 160 des Prüfkörpers 120 mittels eines 2D-Bildkorrelationsalgorithmus auf.

Ein weiteres Ausführungsbeispiel der Erfindung schafft ein Verfahren 200 zur Datenermittlung für eine zerstörungsfreie 3D-Untersuchung eines Prüfkörpers 120 mittels Computer-Tomographie, mit folgenden Schritten: Auswählen eines Referenzdatensatzes aus einer Abfolge 250-2 von aktualisierten Referenzdatensätzen mit Bildinformationen einer ersten Folge 210-1 von Röntgendurchstrahlungsaufnahmen 160 des Prüfkörpers 120, wobei die erste Folge 210-1 von Röntgendurchstrahlungsaufnahmen 160 eine erste durchschnittliche Winkelschrittweite $\Delta\alpha$ aufweist, Erzeugen 220 von Bildinformationen einer zweiten Folge 220-1 von Röntgendurchstrahlungsaufnahmen 160 des Prüfkörpers 120, der einen ersten Zustand aufweist, mit einer durchschnittlichen Winkelschrittweite $\Delta\beta$, wobei die zweite Winkelschrittweite $\Delta\beta$ größer als die erste Winkelschrittweite $\Delta\alpha$ ist; Vergleichen 230 der Bildinformationen der zweiten Folge 220-1 von Röntgendurchstrahlungsaufnahmen 160 jeweils mit den winkelmäßig zugeordneten Bildinformationen der ersten Folge 210-1 von Röntgendurchstrahlungsaufnahmen 160 mittels einer 2D-Bildkorrelation, um ein erstes Vergleichsergebnis 230-1 zu erhalten; falls das Vergleichsergebnis 230-1 an einer Winkelposition $\beta_i$ der zweiten Folge 220-1 einen Grenzwert erreicht, Erzeugen 240 von Bildinformationen einer dritten Folge 240-1 von Röntgendurchstrahlungsaufnahmen 160 des Prüfkörpers 120 bereichsweise um die Winkelposition $\beta_i$ und mit einer dritten durchschnittlichen Winkelschrittweite $\Delta\gamma$, wobei die dritte Winkelschrittweite $\Delta\gamma$ kleiner als die zweite Winkelschrittweite $\Delta\beta$ ist; und Aktualisieren 250 des

Referenzdatensatzes basierend auf den Bildinformationen der dritten Folge 240-1 von Röntgendurchstrahlungsaufnahmen 160, um einen aktualisierten Referenzdatensatz 250-1 zu erhalten; wobei die Schritte des Erzeugens 220 von Bildinformationen einer zweiten Folge 220-1, des Vergleichens 230 der Bildinformationen, des Erzeugens 240 von Bildinformationen einer dritten Folge 240-1 und des Aktualisierens 250 des Referenzdatensatzes 250-1 nacheinander und wiederholt durchgeführt werden, um die Abfolge 250-2 von aktualisierten Referenzdatensätzen zu erhalten.

Ein bevorzugtes Ausführungsbeispiel des Verfahrens weist ferner folgenden Schritt auf: Rekonstruieren 260 einer Mehrzahl 260-1 von 3D-Bildern basierend auf der Abfolge 250-2 von aktualisierten Referenzdatensätzen.

Bei einem weiteren bevorzugten Ausführungsbeispiel des Verfahrens sind den Bildinformationen der Röntgendurchstrahlungsaufnahmen 160 Durchstrahlungswerte/Linienintegrale der Schwächung zugeordnet, ferner mit folgendem Schritt: Ermitteln einer räumlichen Verteilung der Schwächungskoeffizienten des Prüfkörpers aus einer Mehrzahl von Bildinformationen der Röntgendurchstrahlungsaufnahmen.

Bei einem weiteren bevorzugten Ausführungsbeispiel des Verfahrens weist der Schritt des Aktualisierens 250 des Referenzdatensatzes ferner folgenden Teilschritt auf: Ersetzen zumindest eines Teilsatzes derjenigen Bildinformationen der ersten Folge 210-1, die den Bildinformationen der dritten Folge 240-1 winkelmäßig zugeordnet sind, durch die Bildinformationen der dritten Folge 240-1.

Ein weiteres Ausführungsbeispiel der Erfindung schafft ein Verfahren 300 zum Auswerten einer Abfolge 260-1 von 3D-Bildern mittels einer 3D-Bildkorrelation, mit folgenden Schritten: Bereitstellen 310 einer Abfolge 260-1 von 3D-Bildern, wobei jedes 3D-Bild der Abfolge 260-1 eine Mehrzahl von Volumenelementen aufweist; Auswählen 320 eines ersten 3D-Referenz-Teilbildes 320-1 aus einem ersten 3D-Bild der Abfolge 260-1 von 3D-Bildern; Durchführen 330 einer 3D-Bildkorrelation zwischen dem ersten 3D-Referenz-Teilbild 320-1 und zugeordneten 3D-Teilbildern 320-2 für jedes Volumenelement des zweiten 3D-Bildes der Abfolge 260-1 von 3D-Bildern, um eine räumliche Verteilung 330-1 von Korrelationswerten über die Volumenelemente des zweiten 3D-Bildes zu ermitteln; Ermitteln 340 eines aktualisierten 3D-Referenz-Teilbildes 340-1, das diejenigen Volumenelemente des zweiten 3D-Referenz-Teilbildes, bei denen die Korrelationswerte ein relatives Maximum erreichen, aufweist; wobei die 3D-Bildkorrelation mittels einer Fourier-Transformation im Frequenzraum durchgeführt wird.

Bei einem bevorzugten Ausführungsbeispiel des Verfahrens wird die 3D-Bildkorrelation als Faltung dargestellt.

Bei einem weiteren bevorzugten Ausführungsbeispiel des Verfahrens wird die Faltung im Ortsraum mittels einer Fourier-Transformation 350 in eine Multiplikation 360 zwischen den Fourier-Transformierten 350-1, 350-2 des ersten 3D-Referenz-Teilbildes 320-1 und zugeordneten 3D-Teilbildern 320-2 für jedes Volumenelement des zweiten 3D-Bildes der Abfolge 260-1 von 3D-Bildern im Frequenzraum überführt, und das Multiplikationsergebnis 360-1 wird mittels einer inversen Fourier-Transformation wiederum in den Ortsraum überführt.

Bei einem weiteren bevorzugten Ausführungsbeispiel des Verfahrens weisen die Fourier-Transformation und die inverse Fouriertransformation diskrete FFT (Fast-Fourier-Transform)-Algorithmen auf.

Ein weiteres Ausführungsbeispiel der Erfindung schafft ein Verfahren 400 zur zerstörungsfreien 3D-Untersuchung eines Prüfkörpers mittels Computer-Tomographie, wobei eine Datenermittlung 200 zur Erzeugung einer Abfolge 260-1 von 3D-Bildern des Prüfkörpers 120 gemäß einem der Patentansprüche 1 bis 15 durchgeführt, wird; und ferner ein Auswerten 300 der Sequenz 260-1 von 3D-Bildern mittels einer oben genannten 3D-Bildkorrelation durchgeführt wird.

Ein weiteres Ausführungsbeispiel der Erfindung schafft eine Vorrichtung 100 für eine zerstörungsfreie 3D-Untersuchung eines Prüfkörpers 120 mittels Computer-Tomographie, mit folgenden Merkmalen: einer Einrichtung 180 zum Bereitstellen eines Referenzdatensatzes mit Bildinformationen einer ersten Folge 210-1 von Röntgendurchstrahlungsaufnahmen. 160 des Prüfkörpers 120, wobei die erste Folge 210-1 von Röntgendurchstrahlungsaufnahmen 160 eine erste durchschnittliche Winkelschrittweite $\Delta\alpha$ aufweist; einer Einrichtung 105 zum Erzeugen von Bildinformationen einer zweiten Folge 220-1 von Röntgendurchstrahlungsaufnahmen 160 des Prüfkörpers 120, der einen ersten Zustand aufweist, mit einer durchschnittlichen Winkelschrittweite $\Delta\beta$, wobei die zweite Winkelschrittweite $\Delta\beta$ größer als die erste Winkelschrittweite $\Delta\alpha$ ist und zum Erzeugen von Bildinformationen einer dritten Folge 240-1 von Röntgendurchstrahlungsaufnahmen 160 des Prüfkörpers 120 bereichsweise um die Winkelposition $\beta_i$, bei der das Vergleichsergebnis der zweiten Folge 220-1 einen Grenzwert erreicht, und mit einer dritten durchschnittlichen Winkelschrittweite Ay, wobei die dritte Winkelschrittweite Ay kleiner als die zweite Winkelschrittweite $\Delta\beta$ ist; und einer Verarbeitungseinrichtung 170 zum Vergleichen der Bildinformationen der zweiten Folge 220-1 von Röntgendurchstrahlungsaufnahmen 160 jeweils mit den winkelmäßig zugeordneten Bildinformationen der ersten Folge 210-1 von Röntgendurchstrahlungsaufnahmen 160 mittels einer 2D-Bildkorrelation, um ein Vergleichsergebnis 230-1 zu erhalten und die ausgebildet ist, um den Referenzdatensatz 210-1 basierend auf den Bildinformationen der dritten Folge 240-1 von Röntgendurchstrahlungsaufnahmen 160 zu aktualisieren, um einen aktualisierten Referenzdatensatz 250-1 zu erhalten.

Ein weiteres Ausführungsbeispiel der Erfindung schafft ein Computerprogrammprodukt mit einem Programmcode zur Durchführung der oben genannten Verfahrensschritte, wenn das Programm auf einem Computer abläuft.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM,

eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausfiihrungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die erfindungsgemäßen Bildinformationen können auf einem digitalen Speichermedium gespeichert sein oder können auf einem Übertragungsmedium wie beispielsweise einem drahtlosen Übertragungsmedium oder einem verdrahteten Übertragungsmedium, z.B. dem Internet, übertragen werden.

Im Allgemeinen schafft die Erfindung somit ein Konzept zur zerstörungsfreien 3D-Untersuchung eines Prüfkörpers mittels Computertomographie, wobei der Vergleich mit dem jeweils vorhergehenden Zustand des Objekts unter Berücksichtigung des zeitlichen Verlaufs präzise Informationen über die aktuelle Geschwindigkeit des Rissfortschritts, über die räumliche Richtung, in der sich der Riss ausbreitet, über die Verteilung von Kräften, die auf das Objekt wirken, und über Materialermüdungserscheinungen, die unmittelbar vor der Entstehung des Risses zu beobachten sind, liefert.

Darüber hinaus ist eine genaue Lokalisierung des Risses möglich, oder es lassen sich Aussagen über die räumliche Ausbreitung des Risses machen.

Insbesondere ermöglicht das vorliegende Konzept vorteilhaft eine dynamische Beobachtung der Rissausbreitung. Im Gegensatz zu Experimenten mit Synchrotronstrahlung, die einen hohen apparativen und zeitlichen Aufwand bedeuten, und bei denen deswegen aus Kostengründen nur exemplarische Untersuchungen durchgeführt werden können, erlaubt die Untersuchung der Rissausbreitung in einer Laborumgebung dagegen die statistische Absicherung der Ergebnisse durch eine hohe Probenzahl.

Ferner schafft die vorliegende Erfindung somit ein Verfahren, mit dem mittels einer dreidimensionalen digitalen Bildkorrelation (3D-DIC) die Ausbreitung des Risses in der räumlichen und der zeitlichen Komponente beobachtet werden kann.

Durch die Verfolgung der Rissausbreitung im 3D-Fall erhöht sich der Informationsgehalt der Messungen um ein Vielfaches. Für die präzise Bestimmung der relevanten Größen stehen nicht nur Durchstrahlungsbilder zur Verfügung, die Linienintegrale über Schwächungskoeffizienten beinhalten, sondern dreidimensionale Volumendatensätze, aus denen Dichteinformationen des Materials bestimmt werden können. Durch diesen deutlich höheren Informationsgehalt können Aussagen über den räumlichen und zeitlichen Verlauf der Schäden präzisiert werden und Vorhersagen über die Lebensdauer von Bauteilen getroffen werden, die dem Testobjekt entsprechen. Gegenüber der zweidimensionalen

Bildkorrelation bedeutet die Hinzunahme einer weiteren Dimension eine Vervielfachung des Rechenaufwands.

Ferner ermöglicht das vorliegende Konzept eine gegenüber gängigen Verfahren verbesserte Detektion von Rissen und Ermüdungserscheinungen auch im Innern von Bauteilen, wodurch Vorhersagen über die Lebensdauer der Bauteile gemacht werden können. Außerdem kann die Präzision, mit der Risse lokalisiert werden können, erhöht werden. Durch das vorliegende Verfahren entstehen ungleich mehr Messdaten als in bisherigen Prüfverfahren. Diese Datenmenge kann durch die inkrementelle Rekonstruktion minimiert werden. Außerdem erhöht sich der Rechenaufwand in der dreidimensionalen Bildkorrelation im Vergleich zu dem Verfahren im zweidimensionalen Fall. Dieser erhöhte Aufwand kann jedoch durch alternative Berechnungsmethoden minimiert werden.

Ganz allgemein schafft die Erfindung ein neuartiges Rekonstruktionsverfahren, das gegenüber gängigen Verfahren die folgenden Vorteile liefert:

- hochpräzise Ortsinformation, dreidimensionale Darstellung der Schäden
- frühzeitige Erkennung von Schädigungsereignissen, eventuell sogar vor der Entstehung von Rissen
- Erkennbarkeit von Schäden im Innern von Prüfteilen.

Weiterhin ergibt sich durch das Konzept einer Sequenz von Volumina gegenüber gängigen Verfahren ein stark erhöhtes Datenaufkommen, sowie ein erhöhter Rechenaufwand. Im Gegenzug finden je nach Beschaffenheit des zu prüfenden Materials Risse und Brüche innerhalb von kürzester Zeit statt. Diese Herausforderungen werden wie folgt gelöst:

- Nur minimale Vergrößerung der Datenmenge durch inkrementelle Rekonstruktion
- Zeitersparnis in der Aufnahme durch gröbere Abrasterung des Objekts, solange keine Veränderung messbar ist
- Zeitersparnis in der Rekonstruktion durch Berücksichtigung vorhergehender Information
- Nur minimal erhöhter Rechenaufwand durch 3D-DIC im Frequenzraum.

Zusammenfassend schafft die Erfindung auch eine Methode zur schnellen Datenaufnahme und Rekonstruktion für eine Röntgen-Computertomographie an Bauteilen, die einem Belastungstest unterzogen werden. Da sich die inneren Strukturen von Bauteilen, die einer periodischen oder kontinuierlichen Belastung ausgesetzt werden, vor einem Versagen (Bruch) des Bauteils entscheidend verändern, ist es von höchstem Interesse, das Innere der Bauteile kontinuierlich abzubilden, während der Belastungstest läuft. Die vorliegende Erfindung ermöglicht dies durch eine dynamische Computertomographie, die während der Datenaufnahme zeitaufgelöst Veränderungen im Bauteil detektiert und zusätzliche Daten inkrementell rekonstruiert.

<u>**Bezugszeichen**</u>

| | |
|---|---|
| 100 | Vorrichtung für die zerstörungsfreie 3D-Untersuchung des Prüfkörpers mittels Computertomographie |
| 105 | CT-Anlage |
| 110 | Röntgenstrahlungsquelle |
| 112 | Röntgenstrahlen |
| 120 | Prüfkörper |
| 130 | Röntgenempfindlicher Detektor |
| 132 | Pixelraster des röntgenempfindlichen Detektors |
| 140 | Rotationsachse |
| 152 | Winkelbereich der Rotation |
| 160 | Röntgendurchstrahlungsaufnahme (Projektion) |
| 162 | Folge von Röntgendurchstrahlungsaufnahmen |
| 170 | Verarbeitungseinrichtung |
| 180 | Bereitstellungseinrichtung |
| 190 | Anzeige (optional) |
| 200 | Verfahren zur Datenermittlung |
| 210 | Bereitstellen der ersten Folge von Röntgendurchstrahlungsaufnahmen |

| | |
|---|---|
| 210-1 | Erste Folge von Röntgendurchstrahlungsaufnahmen |
| 220 | Erzeugen der zweiten Folge von Röntgendurchstrahlungsaufnahmen |
| 220-1 | Zweite Folge von Röntgendurchstrahlungsaufnahmen |
| 230 | Vergleichen der zweiten Folge mit der ersten Folge |
| 230-1 | Vergleichsergebnis |
| 240 | Erzeugen der dritten Folge von Röntgendurchstrahlungsaufnahmen |
| 240-1 | Dritte Folge von Röntgendurchstrahlungsaufnahmen |
| 250 | Aktualisieren des Referenzdatensatzes |
| 250-1 | Aktualisierter Referenzdatensatz |
| 250-2 | Abfolge von (weiteren) aktualisierten Referenzdatensätzen |
| 260 | Rekonstruieren der Abfolge von 3D-Bildern (optional) |
| 260-1 | Abfolge (Sequenz) von 3D-Bildern (3D-Volumina) |
| 270 | Rekonstruieren (optional) |
| 270-1 | Rekonstruiertes 3D-Bild (aus Verfahrensschritt 270) |
| 280 | Vergleichen der dritten Folge mit der ersten Folge (optional) |
| 280-1 | Weiteres Vergleichsergebnis (aus Verfahrensschritt 280) |
| 290 | Aktualisieren des Referenzdatensatzes nach Verfahrensschritt 280 |
| 300 | Verfahren zur Datenauswertung |
| 310 | Bereitstellen der Abfolge (Sequenz) von 3D-Bildern |
| 320 | Auswählen des ersten 3D-Referenz-Teilbildes (Volumenausschnitts) |
| 320-1 | Erstes 3D-Referenz-Teilbild |
| 320-2 | 3D-Teilbilder des zweiten 3D-Bildes |
| 330 | Durchführen der 3D-Bildkorrelation im Frequenzraum |
| 330-1 | 3D-Verteilung von Korrelationswerten |
| 340 | Ermitteln des aktualisierten 3D-Referenz-Teilbildes |
| 340-1 | Aktualisiertes 3D-Referenz-Teilbild |
| 340-2 | Abfolge von aktualisierten 3D-Referenz-Teilbildern |
| 350 | Fourier-Transformation |
| 350-1 | Fourier-Transformierte des ersten 3D-Referenz-Teilbildes |
| 350-2 | Fourier-Transformierte der 3D-Teilbilder des zweiten 3D-Bildes |
| 360 | Multiplikation der Fourier-Transformierten |
| 360-1 | Multiplikationsergebnis |
| 370 | Inverse Fourier-Transformation |
| 400 | Verfahren zur zerstörungsfreien 3D-Untersuchung |

**Variablen**

| | |
|---|---|
| $\alpha_i$ | Winkelpositionen einer Folge von Röntgendurchstrahlungsaufnahmen |
| $\beta_i$, $\beta_{i-1}$, $\beta_{i+1}$ | Winkelpositionen der zweiten Folge von Röntgendurchstrahlungsaufnahmen |
| $\gamma_i$ | Winkelpositionen der dritten Folge von Röntgendurchstrahlungsaufnahmen |
| $(\chi_i, \xi_i)$ | Punkt im nicht deformierten Bild in der Bildkorrelation |
| $(\chi_i^*, \xi_i^*)$ | Punkt im deformierten Bild in der Bildkorrelation |
| $\Delta\chi$, $\Delta\xi$ | Verschiebungen in der Bildkorrelation |
| $\Delta$ | Durchschnittliche Winkelschrittweite |
| $\Delta\alpha$ | Erste durchschnittliche Winkelschrittweite |
| $\Delta\beta$ | Zweite durchschnittliche Winkelschrittweite |
| $\Delta\gamma$ | Dritte durchschnittliche Winkelschrittweite |
| $\Delta\nu$ | Durchschnittliche Winkelschrittweite bei einer zyklischen Belastung |
| $\mu(\mathbf{r})$ | Schwächungskoeffizient |
| a [Hz] | Frequenz bei zyklischer Belastung |
| C | Korrelationskoeffizient |
| $C_{ij}$ | Korrelationskoeffizienten im zweidimensionalen Fall |
| $F(\chi_i, \xi_j)$ | Pixelintensität am Punkt $(\chi_i, \xi_i)$ im nicht deformierten Bild |
| $G(\chi_i^*, \xi_i^*)$ | Pixelintensität am Punkt $(\chi_i^*, \xi_i^*)$ im deformierten Bild |

$\overline{F}$, $\overline{G}$ Mittelwerte der Intensitätsmatrizen F, G in der Bildkorrelation
R{μ(r)} Radon-Transformierte des Schwächungskoeffizienten
$R^{-1}$ Radon-Rücktransformation (inverse Radon-Transformationen)
u, v Verschiebungskomponenten in der Bildkorrelation
T Grenzwert des Vergleichsergebnisses
x, y, z Koordinatensystem zu Fig. 1

**Patentansprüche**

1. Verfahren (200) zur Datenermittlung für eine zerstörungsfreie 3D-Untersuchung eines Prüfkörpers (120) mittels Computer-Tomographie, mit folgenden Schritten:

   Bereitstellen (210) eines Referenzdatensatzes (210-1) mit Bildinformationen einer ersten Folge (210-1) von Röntgendurchstrahlungsaufnahmen (160) des Prüfkörpers (120), wobei die erste Folge (210-1) von Röntgendurchstrahlungsaufnahmen (160) eine erste durchschnittliche Winkelschrittweite $\Delta\alpha$ aufweist;
   Erzeugen (220) von Bildinformationen einer zweiten Folge (220-1) von Röntgendurchstrahlungsaufnahmen (160) des Prüfkörpers (120), der einen ersten Zustand aufweist, mit einer durchschnittlichen Winkelschrittweite $\Delta\beta$, wobei die zweite Winkelschrittweite $\Delta\beta$ größer als die erste Winkelschrittweite $\Delta\alpha$ ist;
   Vergleichen (230) der Bildinformationen der zweiten Folge (220-1) von Röntgendurchstrahlungsaufnahmen (160) jeweils mit den winkelmäßig zugeordneten Bildinformationen der ersten Folge (210-1) von Röntgendurchstrahlungsaufnahmen (160) mittels einer 2D-Bildkorrelation, um ein Vergleichsergebnis (230-1) zu erhalten;
   falls das Vergleichsergebnis (230-1) an einer Winkelposition $\beta_i$ der zweiten Folge (220-1) einen Grenzwert erreicht; Erzeugen (240) von Bildinformationen einer dritten Folge (240-1) von Röntgendurchstrahlungsaufnahmen (160) des Prüfkörpers (120) bereichsweise um die Winkelposition $\beta_i$ und mit einer dritten durchschnittlichen Winkelschrittweite $\Delta\gamma$, wobei die dritte Winkelschrittweite $\Delta\gamma$ kleiner als die zweite Winkelschrittweite $\Delta\beta$ ist; und
   Aktualisieren (250) des Referenzdatensatzes (210-1) basierend auf den Bildinformationen der dritten Folge (240-1) von Röntgendurchstrahlungsaufnahmen (160),
   um einen aktualisierten Referenzdatensatz (250-1) zu erhalten.

2. Verfahren nach Anspruch 1, wobei die Bildinformationen des Referenzdatensatzes (210-1) auf einem, sich in einem Ausgangszustand/Grundzustand befindlichen Prüfkörper (120) basieren.

3. Verfahren nach Anspruch 1 oder 2, wobei die Schritte des Erzeugens (220) von Bildinformationen einer zweiten Folge (220-1), des Vergleichens (230) der Bildinformationen der zweiten Folge (220-1), des Erzeugens (240) von Bildinformationen einer dritten Folge (240-1) und des Aktualisierens (250) des Referenzdatensatzes (210-1) aufeinander folgend und wiederholt durchgeführt werden, um eine Abfolge (250-2) von weiteren aktualisierten Referenzdatensätzen zu erhalten, ferner mit folgendem Schritt:

   Auswählen und Bereitstellen des Referenzdatensatzes aus der Abfolge von weiteren aktualisierten Referenzdatensätzen; und
   Rekonstruieren (260) einer Mehrzahl (260-1) von 3D-Bildern basierend auf der Abfolge (250-2) von weiteren aktualisierten Referenzdatensätzen.

4. Verfahren nach einem der vorhergehenden Ansprüche, wobei der Schritt des Aktualisierens (250) des Referenzdatensatzes (210-1) ferner folgenden Teilschritt aufweist:

   Ersetzen zumindest eines Teilsatzes derjenigen Bildinformationen der ersten Folge (210-1), die den Bildinformationen der dritten Folge (240-1) winkelmäßig zugeordnet sind, durch die Bildinformationen der dritten Folge (240-1).

5. Verfahren nach einem der vorhergehenden Ansprüche, ferner mit folgendem Schritt:

   Vergleichen (280) der Bildinformationen der dritten Folge (240-1) jeweils mit den winkelmäßig zugeordneten Bildinformationen der ersten Folge (210-1) mittels einer 2D-Bildkorrelation, um ein weiteres Vergleichsergebnis (280-1) zu erhalten; und
   falls das weitere Vergleichsergebnis (280-1) an einer Winkelposition $\gamma_i$ einen Grenzwert erreicht, Aktualisieren

(290) des Referenzdatensatzes (210-1) um die der Winkelposition $\gamma_i$ zugeordneten Bildinformationen der dritten Folge (240-1).

6. Verfahren nach einem der vorhergehenden Ansprüche, wobei die 2D-Bildkorrelation ein Vergleichen (230, 280) von Bildinformationen der Röntgendurchstrahlungsaufnahmen (160) des Prüfkörpers (120) mittels eines 2D-Bildkorrelationsalgorithmus aufweist.

7. Verfahren (200) zur Datenermittlung für eine zerstörungsfreie 3D-Untersuchung eines Prüfkörpers (120) mittels Computer-Tomographie, mit folgenden Schritten:

Auswählen eines Referenzdatensatzes aus einer Abfolge (250-2) von aktualisierten Referenzdatensätzen mit Bildinformationen einer ersten Folge (210-1) von Röntgendurchstrahlungsaufnahmen (160) des Prüfkörpers (120), wobei die erste Folge (210-1) von Röntgendurchstrahlungsaufnahmen (160) eine erste durchschnittliche Winkelschrittweite $\Delta\alpha$ aufweist,
Erzeugen (220) von Bildinformationen einer zweiten Folge (220-1) von Röntgendurchstrahlungsaufnahmen (160) des Prüfkörpers (120), der einen ersten Zustand aufweist, mit einer durchschnittlichen Winkelschrittweite $\Delta\beta$, wobei die zweite Winkelschrittweite $\Delta\beta$ größer als die erste Winkelschrittweite $\Delta\alpha$ ist;
Vergleichen (230) der Bildinformationen der zweiten Folge (220-1) von Röntgendurchstrahlungsaufnahmen (160) jeweils mit den winkelmäßig zugeordneten Bildinformationen der ersten Folge (210-1) von Röntgendurchstrahlungsaufnahmen (160) mittels einer 2D-Bildkorrelation, um ein erstes Vergleichsergebnis (230-1) zu erhalten;
falls das Vergleichsergebnis (230-1) an einer Winkelposition $\beta_i$ der zweiten Folge (220-1) einen Grenzwert erreicht, Erzeugen (240) von Bildinformationen einer dritten Folge (240-1) von Röntgendurchstrahlungsaufnahmen (160) des Prüfkörpers (120) bereichsweise um die Winkelposition $\beta_i$ und mit einer dritten durchschnittlichen Winkelschrittweite $\Delta\gamma$, wobei die dritte Winkelschrittweite $\Delta\gamma$ kleiner als die zweite Winkelschrittweite $\Delta\beta$ ist; und
Aktualisieren (250) des Referenzdatensatzes basierend auf den Bildinformationen der dritten Folge (240-1) von Röntgendurchstrahlungsaufnahmen (160), um einen aktualisierten Referenzdatensatz (250-1) zu erhalten;
wobei die Schritte des Erzeugens (220) von Bildinformationen einer zweiten Folge (220-1), des Vergleichens (230) der Bildinformationen, des Erzeugens (240) von Bildinformationen einer dritten Folge (240-1) und des Aktualisierens (250) des Referenzdatensatzes (250-1) nacheinander und wiederholt durchgeführt, werden, um die Abfolge (250-2) von aktualisierten Referenzdatensätzen zu erhalten.

8. Verfahren nach Anspruch 7, ferner mit folgendem Schritt:

Rekonstruieren (260) einer Mehrzahl (260-1) von 3D-Bildern basierend auf der Abfolge (250-2) von aktualisierten Referenzdatensätzen.

9. Verfahren nach Anspruch 7 oder 8, wobei den Bildinformationen der Röntgendurchstrahlungsaufnahmen (160) Durchstrahlungswerte/Linienintegrale der Schwächung zugeordnet sind, ferner mit folgendem Schritt:

Ermitteln einer räumlichen Verteilung der Schwächungskoeffizienten des Prüfkörpers aus einer Mehrzahl von Bildinformationen der Röntgendurchstrahlungsauf nahmen.

10. Verfahren nach Anspruch 8 oder 9, wobei der Schritt des Aktualisierens (250) des Referenzdatensatzes ferner folgenden Teilschritt aufweist:

Ersetzen zumindest eines Teilsatzes derjenigen Bildinformationen der ersten Folge (210-1), die den Bildinformationen der dritten Folge (240-1) winkelmäßig zugeordnet sind, durch die Bildinformationen der dritten Folge (240-1).

11. Verfahren (300) zum Auswerten einer Abfolge (260-1) von 3D-Bildern mittels einer 3D-Bildkorrelation, mit folgenden Schritten:

Bereitstellen (310) einer Abfolge (260-1) von 3D-Bildern, wobei jedes 3D-Bild der Abfolge (260-1) eine Mehrzahl von Volumenelementen aufweist;
Auswählen (320) eines ersten 3D-Referenz-Teilbildes (320-1) aus einem ersten 3D-Bild der Abfolge (260-1) von 3D-Bildern;
Durchführen (330) einer 3D-Bildkorrelation zwischen dem ersten 3D-Referenz-Teilbild (320-1) und zugeordneten 3D-Teilbildern (320-2) für jedes Volumenelement des zweiten 3D-Bildes der Abfolge (260-1) von 3D-Bildern, um eine räumliche Verteilung (330-1) von Korrelationswerten über die Volumenelemente des zweiten 3D-Bildes zu ermitteln;
Ermitteln (340) eines aktualisierten 3D-Referenz-Teilbildes (340-1), das diejenigen Volumenelemente des zweiten 3D-Referenz-Teilbildes, bei denen die Korrelationswerte ein relatives Maximum erreichen, aufweist;
wobei die 3D-Bildkorrelation mittels einer Fourier-Transformation im Frequenzraum durchgeführt wird.

**12.** Verfahren nach Anspruch 11, wobei die 3D-Bildkorrelation als Faltung dargestellt wird, wobei die Faltung im Ortsraum mittels einer Fourier-Transformation (350) in eine Multiplikation (360) zwischen den Fourier-Transformierten (350-1, 350-2) des ersten 3D-Referenz-Teilbildes (320-1) und zugeordneten 3D-Teilbildern (320-2) für jedes Volumenelement des zweiten 3D-Bildes der Abfolge (260-1) von 3D-Bildern im Frequenzraum überfährt wird, und wobei das Multiplikationsergebnis (360-1) mittels einer inversen Fourier-Transformation wiederum in den Ortsraum überführt wird.

**13.** Verfahren (400) zur zerstörungsfreien 3D-Untersuchung eines Prüfkörpers mittels Computer-Tomographie, wobei eine Datenermittlung (200) zur Erzeugung einer Abfolge (260-1) von 3D-Bildern des Prüfkörpers (120) gemäß einem der Patentansprüche 1 bis 6 durchgeführt wird; und ferner ein Auswerten 300 der Sequenz (260-1) von 3D-Bildern mittels einer 3D-Bildkorrelation gemäß einem der Patentansprüche 7 bis 10 durchgeführt wird.

**14.** Vorrichtung (100) für eine zerstörungsfreie 3D-Untersuchung eines Prüfkörpers 120 mittels Computer-Tomographie, mit folgenden Merkmalen:

einer Einrichtung (180) zum Bereitstellen eines Referenzdatensatzes mit Bildinformationen einer ersten Folge (210-1) von Röntgendurchstrahlungsaufnahmen (160) des Prüfkörpers (120), wobei die erste Folge (210-1) von Röntgendurchstrahlungsaufnahmen (160) eine erste durchschnittliche Winkelschrittweite $\Delta\alpha$ aufweist;
einer Einrichtung (105) zum Erzeugen von Bildinformationen einer zweiten Folge (220-1) von Röntgendurchstrahlungsaufnahmen (160) des Prüfkörpers (120), der einen ersten Zustand aufweist, mit einer durchschnittlichen Winkelschrittweite $\Delta\beta$,
wobei die zweite Winkelschrittweite $\Delta\beta$ größer als die erste Winkelschrittweite $\Delta\alpha$ ist und zum Erzeugen von Bildinformationen einer dritten Folge (240-1) von Röntgendurchstrahlungsaufnahmen (160) des Prüfkörpers (120) bereichsweise um die Winkelposition $\beta_i$, bei der das Vergleichsergebnis der zweiten Folge (220-1) einen Grenzwert erreicht, und mit einer dritten durchschnittlichen Winkelschrittweite $\Delta\gamma$,
wobei die dritte Winkelschrittweite Ay kleiner als die zweite Winkelschrittweite $\Delta\beta$ ist; und
einer Verarbeitungseinrichtung (170) zum Vergleichen der Bildinformationen der zweiten Folge (220-1) von Röntgendurchstrahlungsaufnahmen (160) jeweils mit den winkelmäßig zugeordneten Bildinformationen der ersten Folge (210-1) von Röntgendurchstrahlungsaufnahmen (160) mittels einer 2D-Bildkorrelation, um ein Vergleichsergebnis (230-1) zu erhalten und die ausgebildet ist, um den Referenzdatensatz (210-1) basierend auf den Bildinformationen der dritten Folge (240-1) von Röntgendurchstrahlungsaufnahmen (160) zu aktualisieren, um einen aktualisierten Referenzdatensatz (250-1) zu erhalten.

**15.** Computerprogrammprodukt mit einem Programmcode zur Durchführung der Verfahrensschritte nach einem der Ansprüche 1, 7 oder 11, wenn das Programm auf einem Computer abläuft.

## Claims

**1.** A method (200) for establishing data for a non-destructive 3D examination of a device under test (120) by means of computer tomography, comprising:

providing (210) a reference data set (210-1) comprising image information of a first sequence (210-1) of radiographs (160) of the device under test (120), the first sequence (210-1) of radiographs (160) comprising a first average angle step size
$\Delta\alpha$;
generating (220) image information of a second sequence (220-1) of radiographs (160) of the device under test (120) which comprises a first state, at an average angle step size $\Delta\beta$, the second angle step size $\Delta\beta$ being greater than the first angle step size $\Delta\alpha$;
comparing (230) the image information of the second sequence (220-1) of radiographs (160) each to the, with regard to angle, associated image information of the first sequence (210-1) of radiographs (160) by means of

2D image correlation to obtain a result of comparison (230-1);
if the result of comparison (230-1) reaches a threshold value at an angular position $\beta_i$ of the second sequence (220-1), generating (240) image information of a third sequence (240-1) of radiographs (160) of the device under test (120) region by region around the angular position $\beta_i$ and at a third average angle step size $\Delta\gamma$, the third angle step size $\Delta\gamma$ being smaller than the second angle step size $\Delta\beta$; and
updating (250) the reference data set (210-1) based on the image information of the third sequence (240-1) of radiographs (160) to obtain an updated reference data set (250-1).

**2.** The method in accordance with claim 1, wherein the image information of the reference data set (210-1) are based on a device under test (120) in a starting state/basic state.

**3.** The method in accordance with claim 1 or 2, wherein the steps of generating (220) image information of a second sequence (220-1), comparing (230) the image information of the second sequence (220-1), generating (240) image information of a third sequence (240-1) and updating (250) the reference data set (210-1) are performed consecutively and repeatedly to obtain a succession (250-2) of further updated reference data sets, additionally comprising:

selecting and providing the reference data set from the succession of further updated reference data sets; and
reconstructing (260) a plurality (260-1) of 3D images based on the succession (250-2) of further updated reference data sets.

**4.** The device in accordance with one of the preceding claims, wherein the step of updating (250) the reference data set (210-1) additionally comprises the following sub-step:

replacing at least a sub-set of that image information of the first sequence (210-1) associated, with regard to angle, to the image information of the third sequence (240-1), by the image information of the third sequence (240-1).

**5.** The method in accordance with one of the preceding claims, further comprising:

comparing (280) the image information of the third sequence (240-1) each to the,
with regard to angle, associated image information of the first sequence (210-1) by means of 2D image correlation to obtain a further result of comparison (280-1); and
if the further result of comparison (280-1) reaches a threshold value at an angular position $\gamma_i$, updating (290) the reference data set (210-1) by the image information of the third sequence (240-1) associated to the angular position $\gamma_i$.

**6.** The method in accordance with one of the preceding claims, wherein the 2D image correlation comprises comparing (230, 280) image information of the radiographs (160) of the device under test (120) by means of a 2D image correlation algorithm.

**7.** A method (200) for establishing data for a non-destructive 3D examination of a device under test (120) by means of computer tomography, comprising:

selecting a reference data set from a succession (250-2) of updated reference data sets comprising image information of a first sequence (210-1) of radiographs (160) of the device under test (120), the first sequence (210-1) of radiographs (160) comprising a first average angle step size $\Delta\alpha$,
generating (220) image information of a second sequence (220-1) of radiographs (160) of the device under test (120) which comprises a first state, at an average angle step size $\Delta\beta$, the second angle step size $\Delta\beta$ being greater than the first angle step size $\Delta\alpha$;
comparing (230) the image information of the second sequence (220-1) of radiographs (160) each to the, with regard to angle, associated image information of the first sequence (210-1) of radiographs (160) by means of 2D image correlation to obtain a result of comparison (230-1);
if the result of comparison (230-1) reaches a threshold value at an angular position $\beta_i$ of the second sequence (220-1), generating (240) image information of a third sequence (240-1) of radiographs (160) of the device under test (120) region by region around the angular position $\beta_i$ and at a third average angle step size $\Delta\gamma$, the third angle step size $\Delta\gamma$ being smaller than the second angle step size $\Delta\beta$; and
updating (250) the reference data set based on the image information of the third sequence (240-1) of radiographs (160) to obtain an updated reference data set (250-1);

wherein the steps of generating (220) image information of a second sequence (220-1), comparing (230) the image information, generating (240) image information of a third sequence (240-1) and updating (250) the reference data set (250-1) are performed successively and repeatedly to obtain the succession (250-2) of updated reference data sets.

**8.** The method in accordance with claim 7, further comprising:

reconstructing (260) a plurality (260-1) of 3D images based on the succession (250-2) of updated reference data sets.

**9.** The method in accordance with claim 7 or 8, wherein transmission values / line integrals of attenuation are associated to the image information of the radiographs (160), further comprising:

establishing a spatial distribution of the coefficients of attenuation of the device under test from a plurality of image information of the radiographs.

**10.** The method in accordance with claim 8 or 9, wherein the step of updating (250) the reference data set further comprises the following sub-step:

replacing at least a sub-set of that image information of the first sequence (210-1) associated, with regard to angle, to the image information of the third sequence (240-1), by the image information of the third sequence (240-1).

**11.** A method (300) for evaluating a succession (260-1) of 3D images by means of 3D image correlation, comprising:

providing (310) a succession (260-1) of 3D images, each 3D image of the succession (260-1) comprising a plurality of volume elements;
selecting (320) a first 3D reference sub-image (320-1) from a first 3D image of the succession (260-1) of 3D images;
performing (330) a 3D image correlation between the first 3D reference sub-image (320-1) and associated 3D sub-images (320-2) for each volume element of the second 3D image of the succession (260-1) of 3D images to establish a spatial distribution (330-1) of correlation values across the volume elements of the second 3D image;
establishing (340) an updated 3D reference sub-image (340-1) comprising that volume elements of the second 3D reference sub-image where the correlation values reach a relative maximum;
wherein the 3D image correlation is performed by means of a Fourier transform in the frequency space.

**12.** The method in accordance with claim 11, wherein the 3D image correlation is represented as a convolution, the convolution in the local space being transformed by means of a Fourier transform (350) to a multiplication (360) of the Fourier transforms (350-1, 350-2) of the first 3D reference sub-image (320-1) and associated 3D sub-images (320-2) for each volume element of the second 3D image of the succession (260-1) of 3D images in the frequency space, and the result of the multiplication (360-1) being transformed again to the local space by means of an inverse Fourier transform.

**13.** A method (400) for a non-destructive 3D examination of a device under test by means of computer tomography, wherein establishing data (200) for generating a succession (260-1) of 3D images of the device under test (120) in accordance with one of claims 1 to 6 is performed; and additionally evaluating (300) the sequence (260-1) of 3D images by means of 3D image correlation in accordance with one of claims 7 to 10 is performed.

**14.** A device (100) for a non-destructive 3D examination of a device under test (120) by means of computer tomography, comprising:

means (180) for providing a reference data set comprising image information of a first sequence (210-1) of radiographs (160) of the device under test (120), the first sequence (210-1) of radiographs (160) comprising a first average angle step size
$\Delta\alpha$;
means (105) for generating image information of a second sequence (220-1) of radiographs (160) of the device under test (120) comprising a first state, at an average angle step size $\Delta\beta$, the second angle step size $\Delta\beta$ being

greater than the first angle step size $\Delta\alpha$, and for generating image information of a third sequence (240-1) of radiographs (160) of the device under test (120) region by region around the angular position $\beta_i$ where the result of comparison of the second sequence (220-1) reaches a threshold value, and at a third average angle step size $\Delta\gamma$, the third angle step size $\Delta\gamma$ being smaller than the second angle step size $\Delta\beta$; and
processing means (170) for comparing the image information of the second sequence (220-1) of radiographs (160) each to the, with regard to angle, associated image information of the first sequence (210-1) of radiographs (160) by means of 2D image correlation to obtain a result of comparison (230-1), and configured to update the reference data set (210-1) based on the image information of the third sequence (240-1) of radiographs (160) to obtain an updated reference data set (250-1).

**15.** A computer program product comprising a program code for performing the method steps in accordance with one of claims 1, 7 or 11, when the program runs on a computer.

## Revendications

**1.** Procédé (200) de détermination de données pour une analyse 3D non invasive d'un objet à tester (120) au moyen d'une tomodensitométrie, aux étapes suivantes consistant à:

mettre à disposition (210) un ensemble de données de référence (210-1) avec des informations d'image d'une première succession (210-1) de radiographies (160) de l'objet à tester (120), la première succession (210-1) de radiographies (160) présentant un premier pas angulaire moyen $\Delta\alpha$;
générer (220) des informations d'image d'une deuxième succession (220-1) de radiographies (160) de l'objet à tester (120) présentant un premier état avec un pas angulaire moyen $\Delta\beta$, le deuxième pas angulaire $\Delta\beta$ étant plus grand que le premier pas angulaire $\Delta\alpha$;
comparer (230) les informations d'image de la deuxième succession (220-1) de radiographies (160) chaque fois avec les informations d'images associées selon l'angle de la première succession (210-1) de radiographies (160) au moyen d'une corrélation d'image 2D, pour obtenir un résultat de comparaison (230-1);
si le résultat de comparaison (230-1) à une position angulaire $\beta_i$ de la deuxième succession (220-1) atteint une valeur limite,
générer (240) des informations d'image d'une troisième succession (240-1) de radiographies (160) de l'objet à tester (120) par zone autour de la position angulaire $\beta_i$ et avec un troisième pas angulaire moyen $\Delta\gamma$, le troisième pas angulaire $\Delta\gamma$ étant plus petit que le deuxième pas angulaire $\Delta\beta$; et
mettre à jour (250) l'ensemble de données de référence (210-1) sur base des informations d'image de la troisième succession (240-1) de radiographies (160), pour obtenir un ensemble de données de référence mis à jour (250-1).

**2.** Procédé selon la revendication 1, dans lequel les informations d'image de l'ensemble de données de référence (210-1) se basent sur un objet à tester (120) se trouvant dans un état de départ/état de base.

**3.** Procédé selon la revendication 1 ou 2, dans lequel les étapes consistant à générer (220) des informations d'image d'une deuxième succession (220-1), à comparer (230) les informations d'image de la deuxième succession (220-1), à générer (240) des informations d'image d'une troisième succession (240-1) et à mettre à jour (250) l'ensemble de données de référence (210-1) sont réalisées successivement et de manière répétée, pour obtenir une séquence (250-2) d'autres ensembles de données de référence mis à jour, par ailleurs avec l'étape suivante consistant à:

sélectionner et mettre à disposition l'ensemble de données de référence de la séquence d'autres ensembles de données de référence mis à jour; et
reconstruire (260) une pluralité (260-1) d'images 3D sur base de la séquence (250-2) d'autres ensembles de données de référence mis à jour.

**4.** Procédé selon l'une des revendications précédentes, dans lequel l'étape consistant à mettre à jour (250) l'ensemble de données de référence (210-1) présente par ailleurs l'étape partielle suivante consistant à:

remplacer au moins un ensemble partiel des informations d'image de la première succession (210-1), qui sont associées aux informations d'image de la troisième succession (240-1) selon un angle, par les informations d'image de la troisième succession (240-1).

**5.** Procédé selon l'une des revendications précédentes, par ailleurs avec l'étape suivante consistant à:

comparer (280) les informations d'image de la troisième succession (240-1) chaque fois avec les informations d'image associées selon un angle de la première succession (210-1) à l'aide d'une corrélation d'image 2D, pour obtenir un autre résultat de comparaison (280-1); et
si l'autre résultat de comparaison (280-1) atteint, à une position angulaire $\gamma_i$, une valeur limite, mettre à jour (290) l'ensemble de données de référence (210-1) par les informations d'image de la troisième succession (240-1) associées à la position angulaire $\gamma_i$.

**6.** Procédé selon l'une des revendications précédentes, dans lequel la corrélation d'image 2D présente une comparaison (230, 280) d'informations d'image des radiographies (160) de l'objet à tester (120) à l'aide d'un algorithme de corrélation d'image 2D.

**7.** Procédé (200) de détermination de données pour une analyse 3D non invasive d'un objet à tester (120) au moyen d'une tomodensitométrie, aux étapes suivantes consistant à:

sélectionner un ensemble de données de référence parmi une séquence (250-2) d'ensembles de données de référence mis à jour avec des informations d'image d'une première succession (210-1) de radiographies (160) de l'objet à tester (120), la première succession (210-1) de radiographies (160) présentant un premier pas angulaire moyen $\Delta\alpha$,
générer (220) des informations d'image d'une deuxième succession (220-1) de radiographies (160) de l'objet à tester (120) présentant un premier état avec un pas angulaire moyen $\Delta\beta$, le deuxième pas angulaire $\Delta\beta$ étant plus grand que le premier pas angulaire $\Delta\alpha$;
comparer (230) les informations d'image de la deuxième succession (220-1) de radiographies (160) chaque fois avec les informations d'image associées selon un angle de la première succession (210-1) de radiographies (160) au moyen d'une corrélation d'image 2D, pour obtenir un premier résultat de comparaison (230-1);
si le résultat de comparaison (230-1) à une position angulaire $\beta_i$ de la deuxième succession (220-1) atteint une valeur limite,
générer (240) des informations d'image d'une troisième succession (240-1) de radiographies (160) de l'objet à tester (120) par zone autour de la position angulaire $\beta_i$ et avec un troisième pas angulaire moyen $\Delta\gamma$, le troisième pas angulaire $\Delta\gamma$ étant plus petit que le deuxième pas angulaire $\Delta\beta$; et
mettre à jour (250) l'ensemble de données de référence (210-1) sur base des informations d'image de la troisième succession (240-1) de radiographies (160), pour obtenir un ensemble de données de référence mis à jour (250-1);
les étapes consistant à générer (220) des informations d'image d'une deuxième succession (220-1), à comparer (230) les informations d'image, à générer (240) des informations d'image d'une troisième succession (240-1) et à mettre à jour (250) l'ensemble de données de référence (250-1) étant réalisées successivement et de manière répétée, pour obtenir la séquence (250-2) d'ensembles de données de référence mis à jour.

**8.** Procédé selon la revendication 7, par ailleurs avec l'étape suivante consistant à:

reconstruire (260) une pluralité (260-1) d'images 3D sur base de la séquence (250-2) d'ensembles de données de référence mis à jour.

**9.** Procédé selon la revendication 7 ou 8, dans lequel aux informations d'image des radiographies (160) sont associées des valeurs de radiation/intégrale de lignes de l'affaiblissement, par ailleurs avec l'étape suivante consistant à:

déterminer une répartition spatiale des coefficients d'affaiblissement de l'objet à tester à partir d'une pluralité d'informations d'image des radiographies.

**10.** Procédé selon la revendication 8 ou 9, dans lequel l'étape consistant à mettre à jour (250) l'ensemble de données de référence présente par ailleurs l'étape partielle suivante consistant à:

remplacer au moins un ensemble partiel des informations d'image de la première succession (210-1) associées suivant un angle aux informations d'image de la troisième succession (240-1), par les informations d'image de la troisième succession (240-1).

**11.** Procédé (300) pour évaluer une séquence (260-1) d'images 3D au moyen d'une corrélation d'images 3D, aux étapes

suivantes consistant à:

mettre à disposition (310) une séquence (260-1) d'images 3D,
chaque image 3D de la séquence (260-1) présentant une pluralité d'éléments de volume;
sélectionner (320) une première image partielle de référence 3D (320-1) parmi une première image 3D de la séquence (260-1) d'images 3D;
effectuer (330) une corrélation d'image 3D entre la première image partielle de référence 3D (320-1) et les images partielles 3D associées (320-2) pour chaque élément de volume de la deuxième image 3D de la séquence (260-1) d'images 3D, pour déterminer une répartition spatiale (330-1) de valeurs de corrélation sur les éléments de volume de la deuxième image 3D;
déterminer (340) une image partielle de référence 3D mise à jour (340-1) présentant les éléments de volume de la deuxième image partielle de référence 3D dans lesquels les valeurs de corrélation atteignent un maximum relatif;
la corrélation d'image 3D étant effectuée au moyen d'une transformation de Fourier dans le domaine fréquentiel.

**12.** Procédé selon la revendication 11, dans lequel la corrélation d'image 3D est représentée comme convolution, la convolution étant transposée au domaine local au moyen d'une transformation de Fourier (350) en une multiplication (360) entre les transformées de Fourier (350-1, 350-2) de la première image partielle de référence 3D (320-1) et les images partielles 3D associées (320-2) pour chaque élément de volume de la deuxième image 3D de la séquence (260-1) d'images 3D dans le domaine fréquentiel, et le résultat de la multiplication (360-1) étant à nouveau transposé au domaine local au moyen d'une transformation de Fourier inverse.

**13.** Procédé (400) d'analyse 3D non invasive d'un objet à tester au moyen d'une tomodensitométrie, dans lequel une détermination de données (200) pour générer une séquence (260-1) d'images 3D de l'objet à tester (120) est effectuée selon l'une des revendications 1 à 6; et par ailleurs une évaluation (300) de la séquence (260-1) d'images 3D est effectuée à l'aide d'une corrélation d'images 3D selon l'une des revendications 7 à 10.

**14.** Dispositif (100) d'analyse 3D non invasive d'un objet à tester (120) au moyen d'une tomodensitométrie, aux caractéristiques suivantes:

un moyen (180) destiné à mettre à disposition un ensemble de données de référence avec des informations d'image d'une première succession (210-1) de radiographies (160) de l'objet à tester (120), la première succession (210-1) de radiographies (160) présentant un premier pas angulaire moyen $\Delta\alpha$;
un moyen (105) destiné à générer des informations d'image d'une deuxième succession (220-1) de radiographies (160) de l'objet à tester (120) présentant un premier état avec un pas angulaire moyen $\Delta\beta$, le deuxième pas angulaire $\Delta\beta$ étant plus grand que le premier pas angulaire $\Delta\alpha$ et à générer des informations d'image d'une troisième succession (240-1) de radiographies (160) de l'objet à tester (120) par zone autour de la position angulaire $\beta_i$ à laquelle le résultat de comparaison de la deuxième succession (220-1) atteint une valeur limite, et avec un troisième pas angulaire moyen $\Delta\gamma$, le troisième pas angulaire $\Delta\gamma$ étant plus petit que le deuxième pas angulaire $\Delta\beta$; et;
un moyen de traitement (170) destiné à comparer les informations d'image de la deuxième succession (220-1) de radiographies (160) chaque fois avec les informations d'images associées selon un angle de la première succession (210-1) de radiographies (160) au moyen d'une corrélation d'image 2D, pour obtenir un résultat de comparaison (230-1) et qui est réalisé pour mettre à jour l'ensemble de données de référence (210-1) sur base des informations d'image de la troisième succession (240-1) de radiographies (160), pour obtenir un ensemble de données de référence mis à jour (250-1).

**15.** Programme d'ordinateur avec un code de programme pour réaliser les étapes de procédé selon l'une des revendications 1, 7 ou 11 lorsque le programme est exécuté sur un ordinateur.

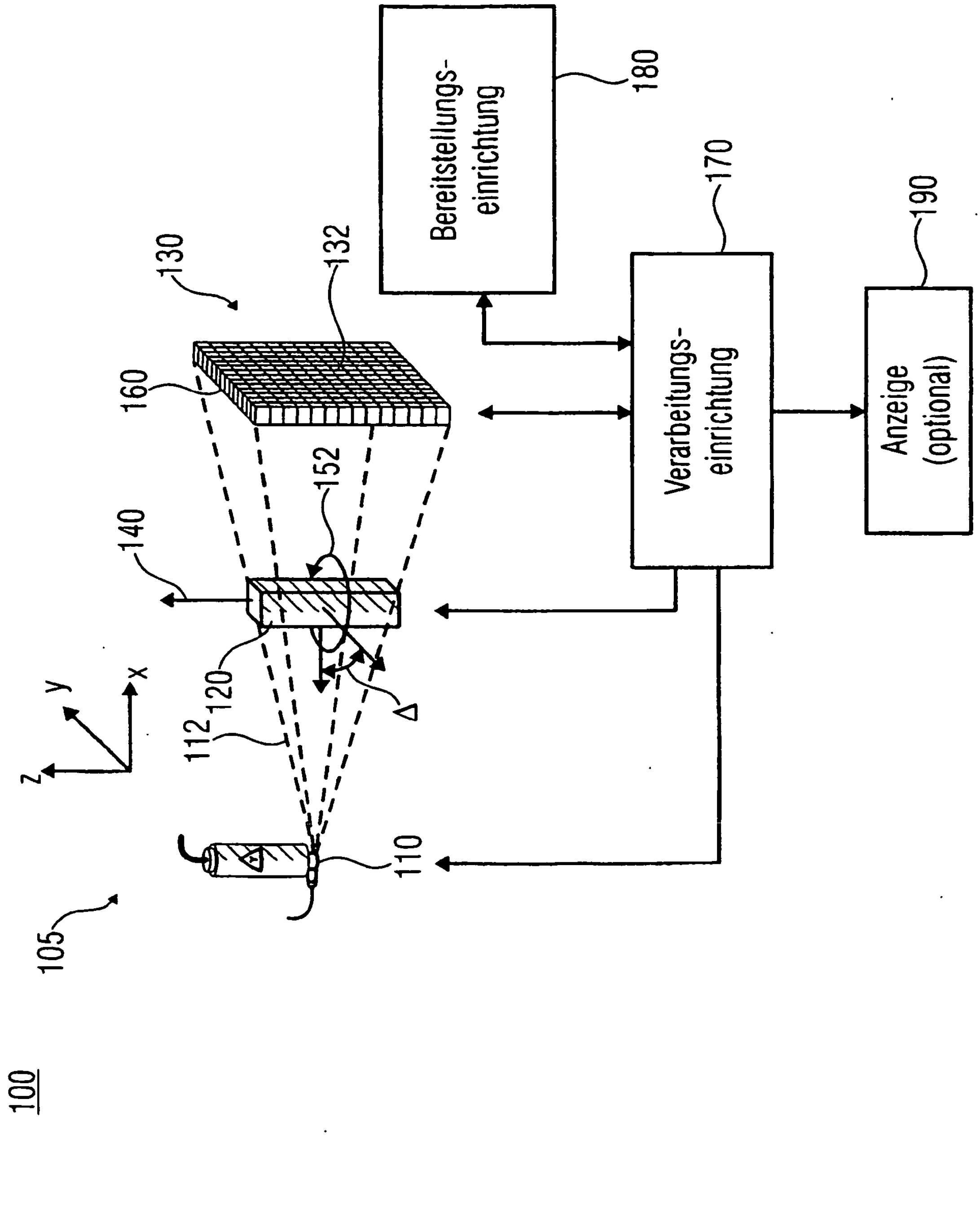
100
105
110
112
120
130
132
140
152
160
Δ
x
y
z
Bereitstellungs-
einrichtung
180
Verarbeitungs-
einrichtung
170
Anzeige
(optional)
190

FIG 1

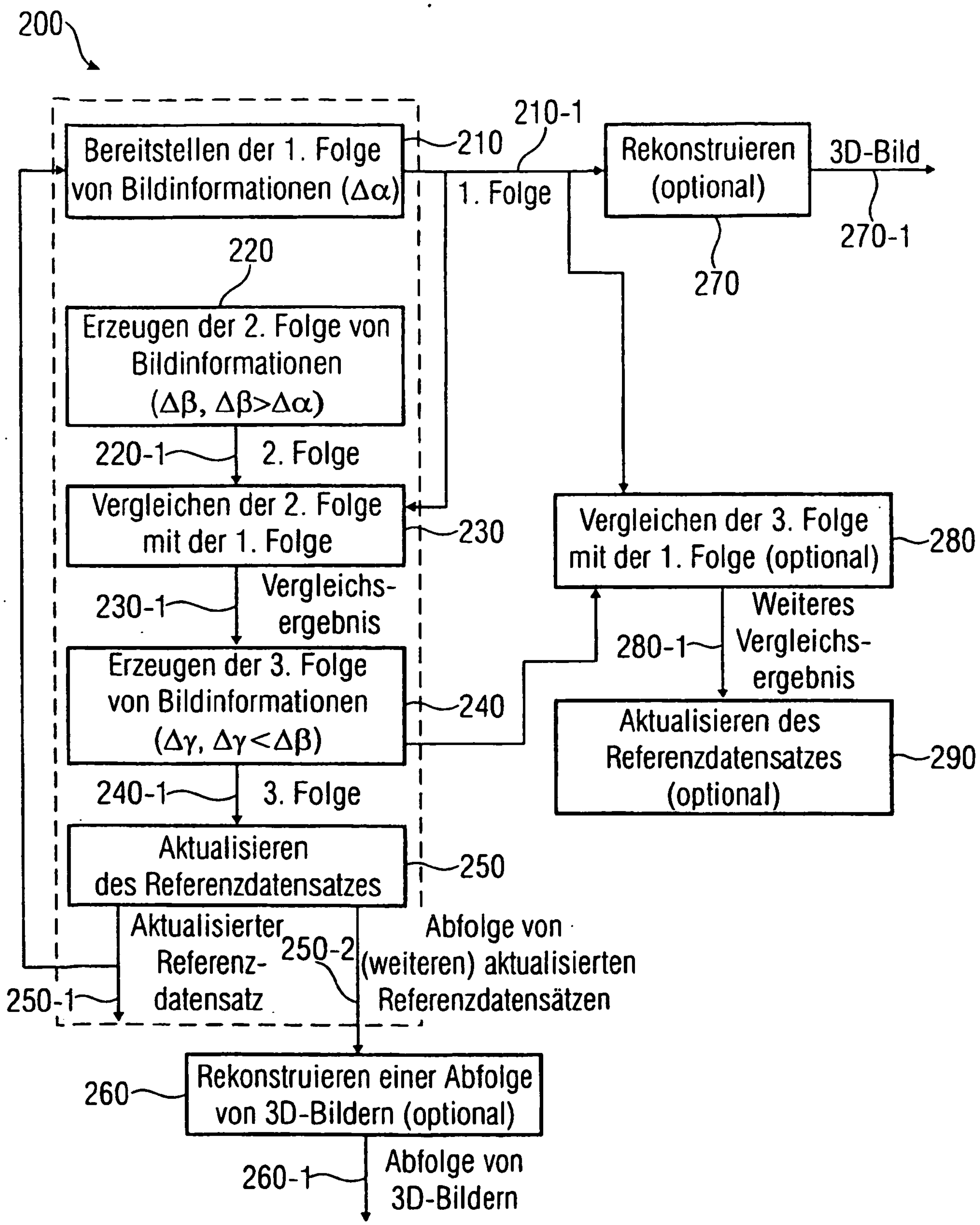
200
Bereitstellen der 1. Folge von Bildinformationen (Δα)
210
210-1
1. Folge
Rekonstruieren (optional)
3D-Bild
270-1
270
220
Erzeugen der 2. Folge von Bildinformationen (Δβ, Δβ>Δα)
220-1
2. Folge
Vergleichen der 2. Folge mit der 1. Folge
230
230-1
Vergleichs-ergebnis
Erzeugen der 3. Folge von Bildinformationen (Δγ, Δγ<Δβ)
240
240-1
3. Folge
Aktualisieren des Referenzdatensatzes
250
Aktualisierter Referenz-datensatz
250-1
250-2
Abfolge von (weiteren) aktualisierten Referenzdatensätzen
Vergleichen der 3. Folge mit der 1. Folge (optional)
280
280-1
Weiteres Vergleichs-ergebnis
Aktualisieren des Referenzdatensatzes (optional)
290
Rekonstruieren einer Abfolge von 3D-Bildern (optional)
260
260-1
Abfolge von 3D-Bildern

FIG 2A

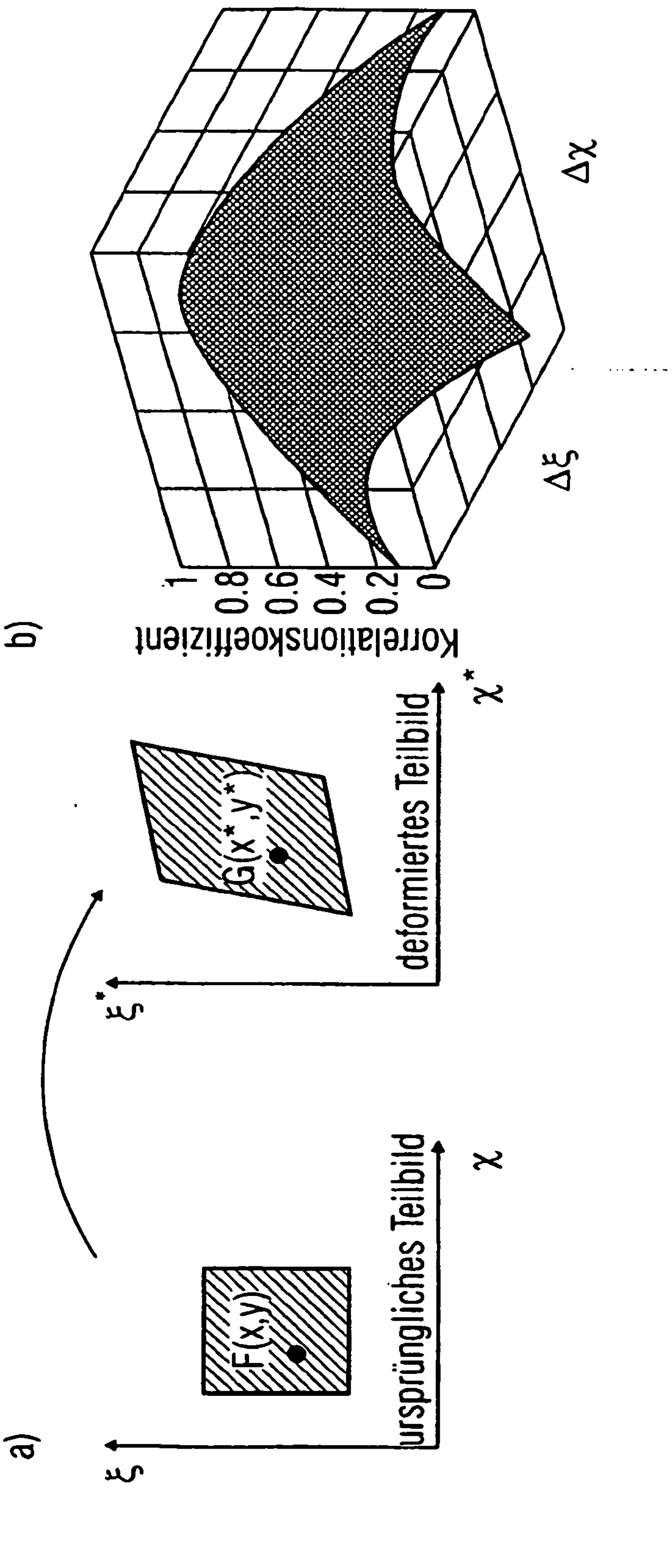
a)
ξ
F(x,y)
ursprüngliches Teilbild
χ
ξ*
G(x*,y*)
deformiertes Teilbild
χ*
b)
Korrelationskoeffizient
1
0.8
0.6
0.4
0.2
0
Δξ
Δχ

FIG 2B

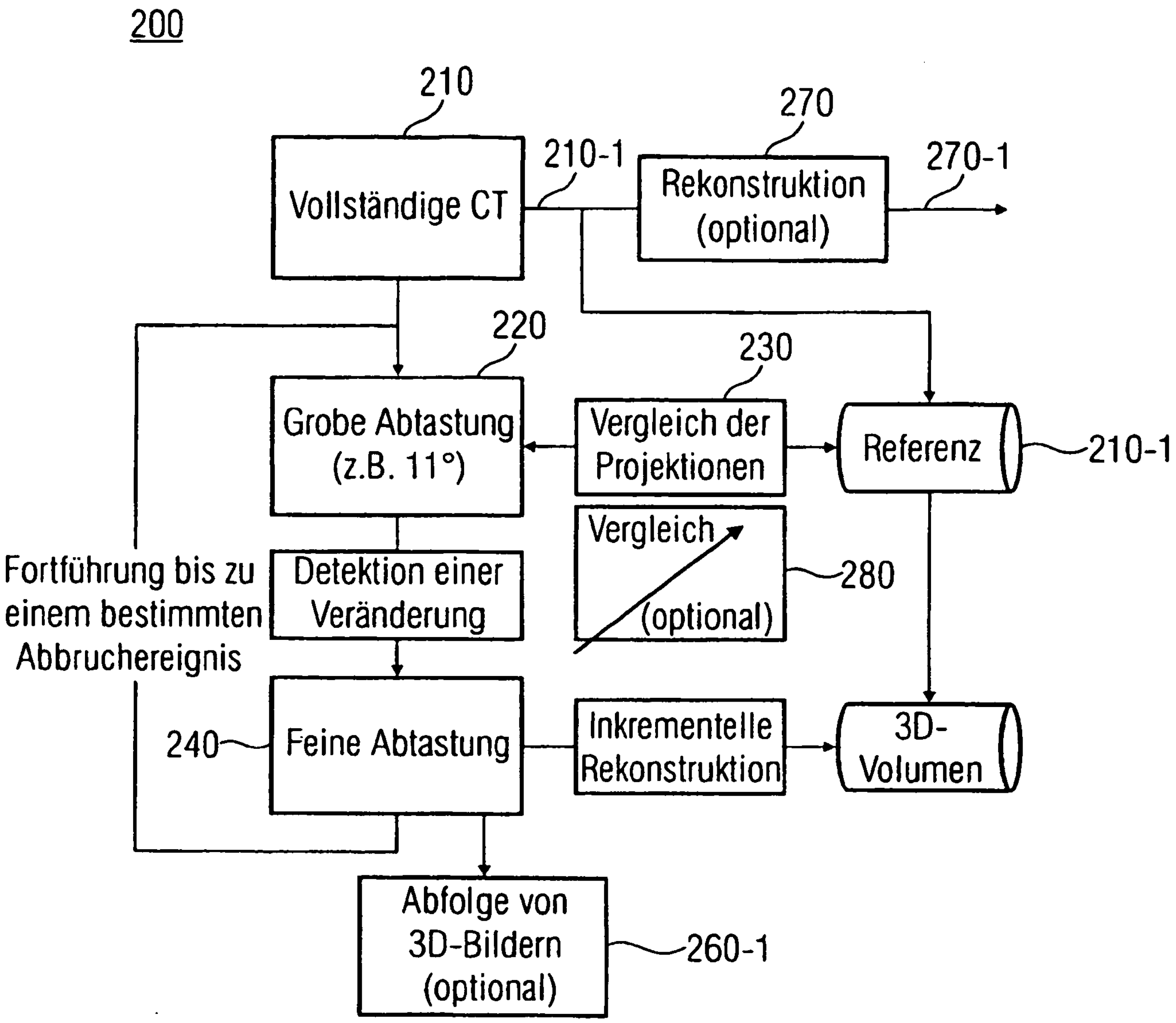
200
210
Vollständige CT
210-1
270
Rekonstruktion (optional)
270-1
220
Grobe Abtastung (z.B. 11°)
230
Vergleich der Projektionen
Referenz
210-1
Fortführung bis zu einem bestimmten Abbruchereignis
Detektion einer Veränderung
Vergleich (optional)
280
240
Feine Abtastung
Inkrementelle Rekonstruktion
3D-Volumen
Abfolge von 3D-Bildern (optional)
260-1

FIG 2C

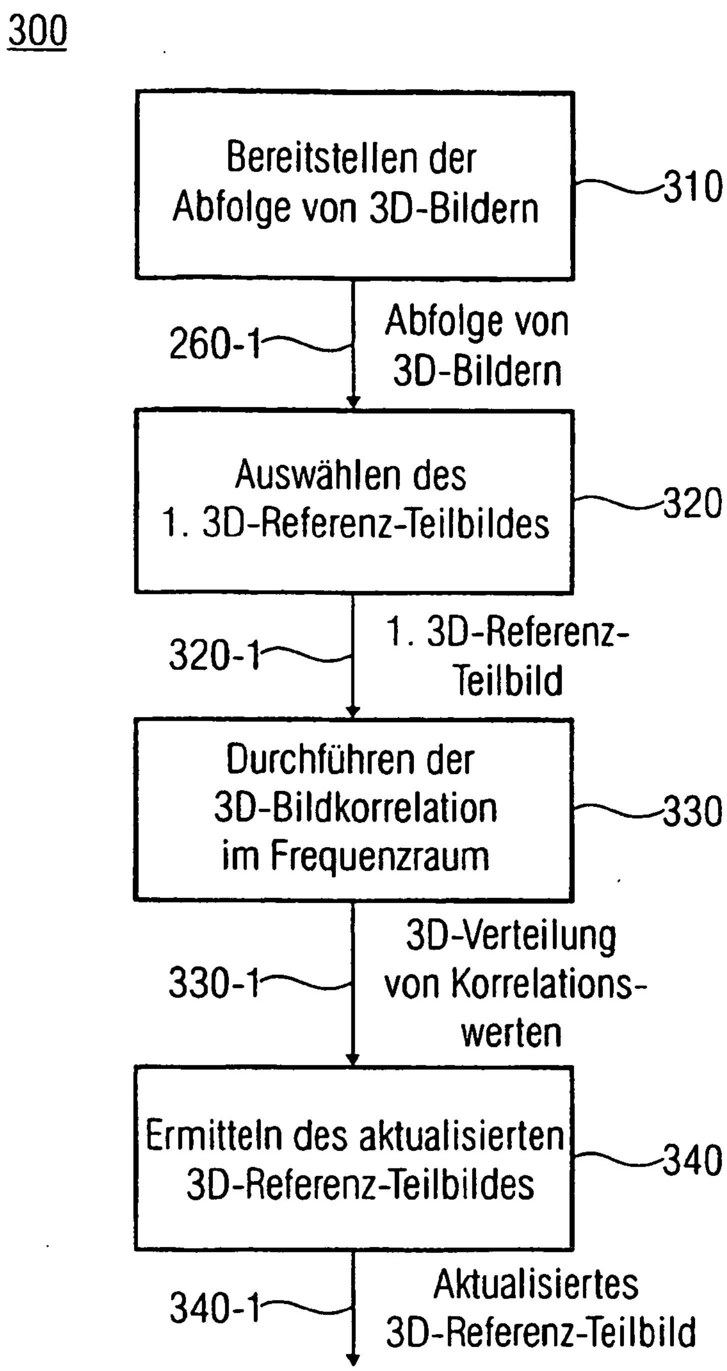
300
Bereitstellen der Abfolge von 3D-Bildern
310
260-1
Abfolge von 3D-Bildern
Auswählen des 1. 3D-Referenz-Teilbildes
320
320-1
1. 3D-Referenz-Teilbild
Durchführen der 3D-Bildkorrelation im Frequenzraum
330
330-1
3D-Verteilung von Korrelationswerten
Ermitteln des aktualisierten 3D-Referenz-Teilbildes
340
340-1
Aktualisiertes 3D-Referenz-Teilbild

FIG 3A

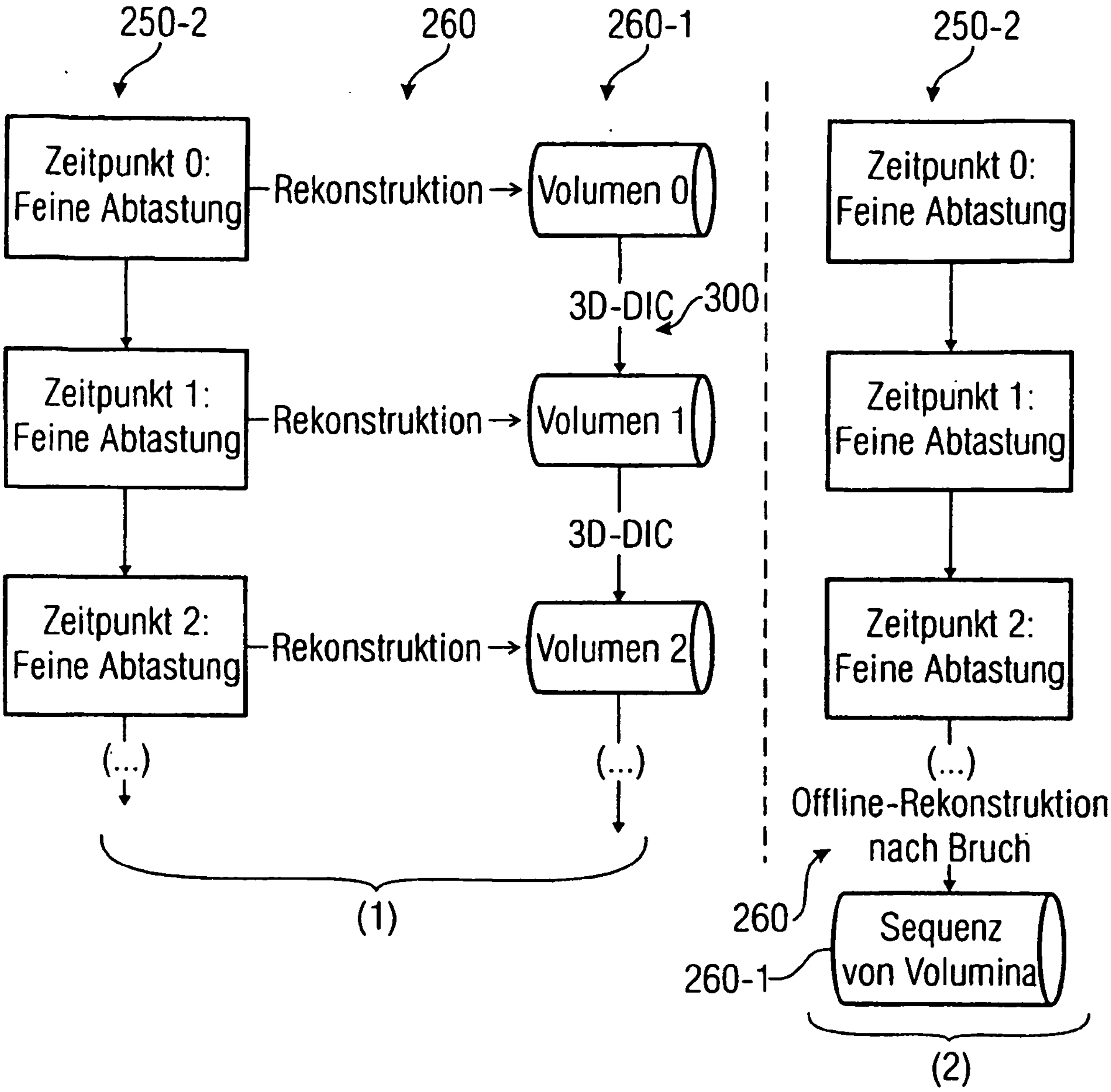
250-2
260
260-1
250-2
Zeitpunkt 0: Feine Abtastung
Rekonstruktion
Volumen 0
3D-DIC
300
Zeitpunkt 1: Feine Abtastung
Rekonstruktion
Volumen 1
3D-DIC
Zeitpunkt 2: Feine Abtastung
Rekonstruktion
Volumen 2
(...)
(...)
(1)
Zeitpunkt 0: Feine Abtastung
Zeitpunkt 1: Feine Abtastung
Zeitpunkt 2: Feine Abtastung
(...)
Offline-Rekonstruktion nach Bruch
260
260-1
Sequenz von Volumina
(2)

FIG 3B

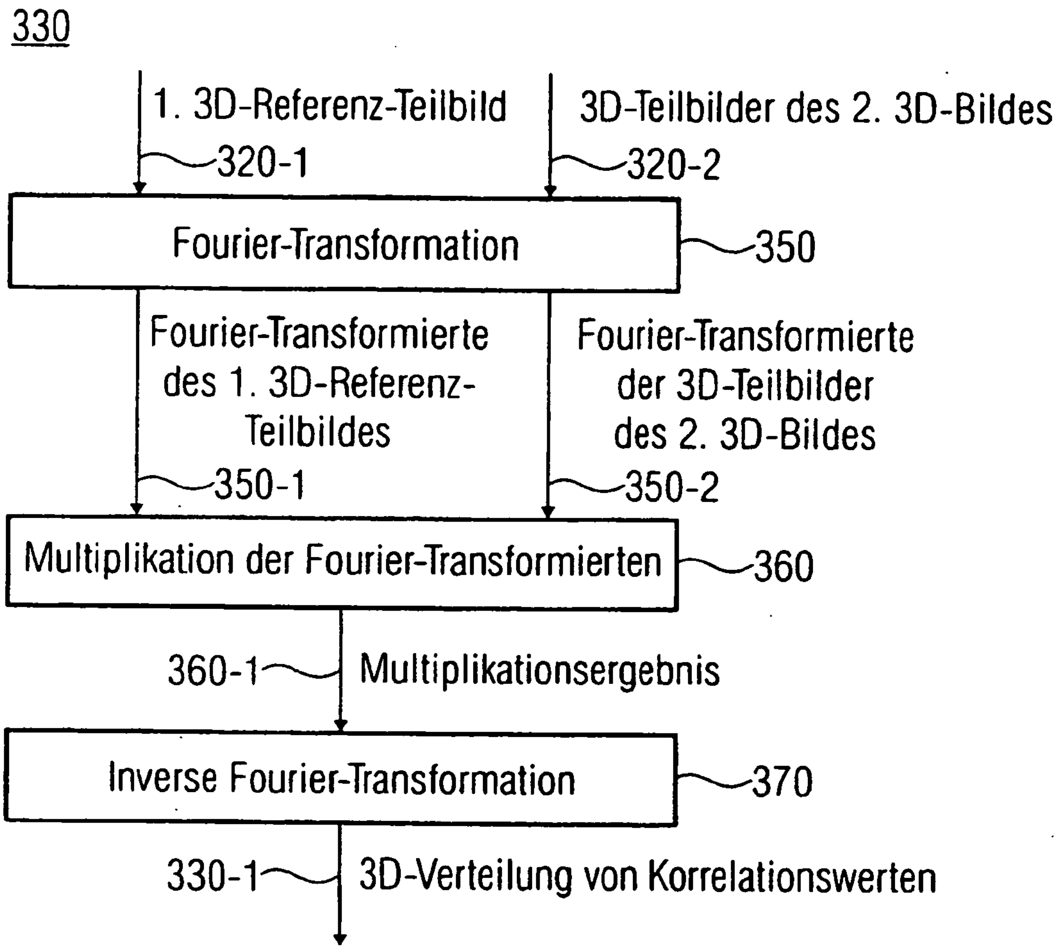
330
1. 3D-Referenz-Teilbild
3D-Teilbilder des 2. 3D-Bildes
320-1
320-2
Fourier-Transformation
350
Fourier-Transformierte des 1. 3D-Referenz-Teilbildes
Fourier-Transformierte der 3D-Teilbilder des 2. 3D-Bildes
350-1
350-2
Multiplikation der Fourier-Transformierten
360
360-1
Multiplikationsergebnis
Inverse Fourier-Transformation
370
330-1
3D-Verteilung von Korrelationswerten

FIG 3C

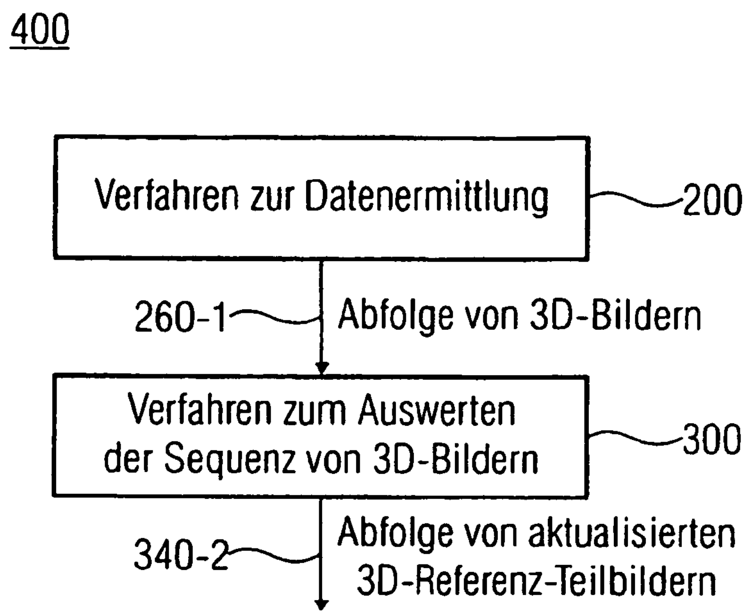
400
Verfahren zur Datenermittlung
200
260-1
Abfolge von 3D-Bildern
Verfahren zum Auswerten der Sequenz von 3D-Bildern
300
340-2
Abfolge von aktualisierten 3D-Referenz-Teilbildern

FIG 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20060137466 A1


### In der Beschreibung aufgeführte Nicht-Patentliteratur


- **J. ABANTO-BUENO ; J. LAMBROS.** Investigation of crack growth in functionally graded materials using digital image correlation. *Engineering Fracture Mechanics,* 2002, vol. 69, 1695-1711
- **TIM HUTT ; PETER CAWLEY.** Feasibility of digital image correlation for detection of cracks at fastener holes. *NDT&E International,* Marz 2006, vol. 42, 141-149
- **E. FERRIE ; J.-Y. BUFFIERE et al.** Fatigue crack propagation: In situ visualization using X-ray microtomography and 3D simulation using the extended finite element method. *Acta Materialia,* Februar 2006, vol. 54 (4), 1111-1122
- **JULIEN RÉTHORÉ ; JEAN-PHILIPPE TINNES ; STÉPHANDE ROUX et al.** Extended three-dimensional digital image correlation (X3D-DIC. *C.R. Mécanique,* Juni 2008, vol. 336, 643-649
- **DANIEL VAVRIK ; JAN JAKUBEK ; TOMAS HOLY.** Micrometric scale measurement of material structure moving utilizing μ-radiographic technique. *Nuclear Instruments and Methods in Physic Research Section A: Accelerators, Spectrometers, Detectors and Associated Equipment,* Juni 2008, vol. 591 (1), 24-27
- **BAY B K et al.** Digital volume correlation: three-dimensional strain mapping using X-ray tomography. *EXPERIMENTAL MECHANICS SAGE SCIENCE PRESS USA,* September 1999, vol. 39 (3), ISSN 0014-4851, 217-226
- **BING PAN et al.** TOPICAL REVIEW; Two-dimensional digital image correlation for in-plane displacement and strain measurement: a review. *MEASUREMENT SCIENCE AND TECHNOLOGY, IOP, BRISTOL,* 01. Juni 2009, vol. 20 (6), ISSN 0957-0233, 62001